# EUROPÄISCHE PATENTANMELDUNG

(11) **EP 4 458 914 A1**
(43) Veröffentlichungstag der Anmeldung: **06.11.2024**
(21) Anmeldenummer: 23171681.2
(22) Anmeldetag: 04.05.2023
(51) Int. Cl.: C09D 5/00, C09D 5/16

(54) **BESCHICHTUNGSMISCHUNG ZUR BESCHICHTUNG VON SUBSTRATEN, VERFAHREN ZUR HERSTELLUNG BESCHICHTETER SUBSTRATE, SOWIE BESCHICHTETES SUBSTRAT UND DESSEN VERWENDUNG**

(71) Anmelder: Zitt GmbH & Co. KG, 81379 München (DE)
(72) Erfinder: Velicsanyi, Peter, 81373 München (DE)
(74) Vertreter: Pfenning, Meinig & Partner mbB

(57) **Zusammenfassung**

Die vorliegende Erfindung betrifft eine Beschichtungsmischung zur Beschichtung von Substraten aus vor Korrosion zu schützendem Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, wobei die Beschichtungsmischung mindestens ein Silan und/oder mindestens ein aus dem mindestens einen Silan gebildetes Oligosiloxan, mindestens einen Komplexbildner zur Komplexierung von Kationen mindestens eines im vor Korrosion zu schützenden Material enthaltenen Metalls, mindestens ein metallhaltiges Ion und mindestens ein Lösungsmittel enthält. Die vorliegende Erfindung betrifft zudem ein Verfahren zur Herstellung beschichteter Substrate sowie ein beschichtetes Substrat und dessen Verwendung.

## Beschreibung

Die vorliegende Erfindung betrifft eine Beschichtungsmischung zur Beschichtung von Substraten aus vor Korrosion zu schützendem Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, wobei die Beschichtungsmischung mindestens ein Silan und/oder mindestens ein aus dem mindestens einen Silan gebildetes Oligosiloxan, mindestens einen Komplexbildner zur Komplexierung von Kationen mindestens eines im vor Korrosion zu schützenden Material enthaltenen Metalls, mindestens ein metallhaltiges Ion und mindestens ein Lösungsmittel enthält. Die vorliegende Erfindung betrifft zudem ein Verfahren zur Herstellung beschichteter Substrate sowie ein beschichtetes Substrat und dessen Verwendung.

Aufgrund des übermäßigen Wachstums der Weltbevölkerung und der hohen Anforderungen verschiedener Industriezweige wird von den Forschern von heute erwartet, dass sie neue, innovative und dauerhafte Materialien entwickeln. Bei Metallen ist die Korrosion das größte Problem, das es zu lösen gilt. Daher sollten kontinuierlich innovative Korrosionsschutztechniken und Korrosionsschutzmethoden entwickelt werden. Eine davon sind verschiedene Beschichtungen: z.B. Konversionsbeschichtungen, Grundierungen, Harze, Lacksysteme.

Viele herkömmliche Korrosionsschutzbeschichtungen sind aufgrund von Umwelt-, Nachhaltigkeits- und Gesundheitsbedenken verboten oder es ist geplant diese zu verbieten. So hat die Automobilindustrie die Verwendung von Passivierungsverfahren auf Chrom(VI)-Basis aufgrund ihrer Toxizität und Karzinogenität bereits eingeschränkt, und diese Einschränkungen werden auch auf die Luft- und Raumfahrtindustrie ausgedehnt. Die Suche nach neuen umweltfreundlichen Materialien und Verfahren könnte zu einem wirksameren Korrosionsschutz von Beschichtungen bei geringeren Kosten führen. So könnte beispielsweise ein spezifischer Zusatzstoff oder eine gezielte Mischung von Zusatzstoffen gefunden werden, der/die, wenn er/sie in ein Beschichtungssystem eingearbeitet wird, die Korrosionsbeständigkeit erheblich verbessern könnte. Eine erhöhte Korrosionsbeständigkeit könnte es ermöglichen, die Dicke der Beschichtungen oder, im Falle eines mehrschichtigen Systems, die Anzahl der erforderlichen Beschichtungen zu verringern, was natürlich ein wichtiger wirtschaftlicher Aspekt wäre.

Darüber hinaus sind mechanische beschädigte Beschichtungen, z.B. durch Bruch, nicht mehr in der Lage, vor Korrosion zu schützen, da die blanke Metalloberfläche an der Bruchstelle mit atmosphärischer Feuchtigkeit und auch mit korrosiven Spezies in Kontakt kommt: Dies führt zu fortschreitender Korrosion unter der Beschichtung und zu Korrosionsschäden am Metallsubstrat selbst. Daher sollten neuartige Korrosionsschutzbeschichtungen in der Lage sein selbst im Falle einer physikalischen bzw. mechanischen Beschädigung der Beschichtung weiter vor Korrosion schützen.

All diese Tatsachen sind von großer Bedeutung, und daher besteht z.B. in den folgenden Industriezweigen ein großer Bedarf an innovativen Lösungen: Automobilindustrie, Luft- und Raumfahrt, Präzisionsbearbeitung, Verteidigung und Schiffbau, da sie hochgiftige Verbindungen vermeiden und gleichzeitig einen angemessenen Korrosionsschutz aufrechterhalten müssen.

Der Korrosionsschutz von Metallsubstraten ist in den letzten Jahrzehnten Gegenstand intensiver Forschung gewesen, aber das Problem ist noch nicht zufriedenstellend gelöst worden. Verschiedene Industriezweige sind davon betroffen, da die Kontrolle der Korrosion ein sehr wichtiges Thema ist, um die Sicherheit und Zuverlässigkeit der hergestellten Metallteile zu gewährleisten, insbesondere in der Automobil- und Luftfahrtindustrie. In diesen Industriezweigen werden verschiedene Aluminium- und Stahllegierungen verwendet, die je nach ihrer Zusammensetzung unterschiedliche Ansätze erfordern.

Ein allgemein akzeptierter und bewährter wirksamer Korrosionsschutz sind Chrom(VI)-Verbindungen, die zur Vorbehandlung von Metallsubstraten, aber auch in Konversionsbeschichtungen eingesetzt werden. Diese bieten aufgrund der Bildung von Oxiden und Hydroxiden einen ausgezeichneten Korrosionsschutz. Da sie jedoch hochgiftig und krebserregend sind, ist ihre Verwendung streng geregelt und teilweise verboten, weshalb neue Materialien gefunden werden müssen.

Ausgehend hiervon war es die Aufgabe der vorliegenden Erfindung eine Mischung zur Beschichtung von Substraten bereitzustellen, mit welcher Beschichtungen mit einem sehr guten Korrosionsschutz erhalten werden können, sowie ein Verfahren zur Herstellung beschichteter Substrate anzugeben, mit welchem beschichtete Substrate erhalten werden können, die einen sehr guten Korrosionsschutz aufweisen.

Diese Aufgabe wird bezüglich einer Beschichtungsmischung zur Beschichtung von Substraten mit den Merkmalen des Patentanspruchs 1, bezüglich eines Verfahrens zur Herstellung beschichteter Substrat mit den Merkmalen des Patentanspruchs 6, und bezüglich eines beschichteten Substrats mit den Merkmalen des Patentanspruchs 10 gelöst. In Patentanspruch 15 werden mögliche Verwendungen des erfindungsgemäßen beschichteten Substrats angegeben. Die abhängigen Patentansprüche stellen vorteilhafte Weiterbildungen dar.

Erfindungsgemäß wird somit eine Beschichtungsmischung (bzw. Mischung) zur Beschichtung von Substraten aus vor Korrosion zu schützendem Material bereitgestellt, wobei das vor Korrosion zu schützende Material ausgewählt ist aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, wobei die Beschichtungsmischung
- mindestens ein Silan und/oder mindestens ein aus dem mindestens einen Silan (durch Vernetzung) gebildetes Oligosiloxan,
- mindestens einen Komplexbildner zur Komplexierung von Kationen mindestens eines im vor Korrosion zu schützenden Material enthaltenen Metalls,
- mindestens ein metallhaltiges Ion, und
- mindestens ein Lösungsmittel

umfasst,
wobei das mindestens eine Silan mindestens eine an das Si-Atom gebundene Alkoxygruppe mit 1 bis 4 Kohlenstoffatomen aufweist, und
wobei
   - der mindestens eine Komplexbildner mindestens einen (zusätzlich) als Reduktionsmittel fungierenden Komplexbildner umfasst, der die reduzierte Form eines (korrespondierenden) Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein niedrigeres (bzw. negativeres) Redoxpotential (bzw. Elektrodenpotential) aufweist als das/die (korrespondierende bzw. korrespondierenden) Redox-Paar(e) eines im vor Korrosion zu schützenden Material enthaltenen Metalls, vorzugsweise als das/die (korrespondierende bzw. korrespondierenden) Redox-Paar(e) im vor Korrosion zu schützenden Material enthaltenen Metalls, und/oder
   - die Beschichtungsmischung zusätzlich mindestens ein Reduktionsmittel enthält, das die reduzierte Form eines (korrespondierenden) Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein niedrigeres (bzw. negativeres) Redoxpotential (bzw. Elektrodenpotential) aufweist als das (korrespondierende) Redox-Paar bzw. die (korrespondierenden) Redox-Paare eines im vor Korrosion zu schützenden Material enthaltenen Metalls, vorzugsweise als das/die (korrespondierende bzw. korrespondierenden) Redox-Paar(e) jedes im vor Korrosion zu schützenden Material enthaltenen Metalls.

Unter dem (korrespondierenden) Redox-Paar bzw. den (korrespondierenden) Redox-Paaren eines im vor Korrosion zu schützenden Material enthaltenen Metalls wird/werden dabei das (korrespondierende) Redox-Paar bzw. die (korrespondierenden) Redox-Paare verstanden, in welchem bzw. welchen das im vor Korrosion zu schützenden Material enthaltene Metall die reduzierte Form ist. Für das Metall Aluminium wäre dies z.B. das (korrespondierende) Redox-Paar Al/Al³⁺. Für das Metall Eisen wären dies z.B. die (korrespondierenden) Redox-Paare Fe/Fe²⁺ und Fe/Fe³⁺.

Durch die Kombination der speziellen Komponenten der erfindungsgemäßen Beschichtungsmischung können mithilfe der Beschichtungsmischung Beschichtungen hergestellt werden, die einen sehr guten Korrosionsschutz aufweisen. Die mit der erfindungsgemäßen Beschichtungsmischung herstellbaren Beschichtungen sind dabei in der Lage das vor Korrosion zu schützende Material nicht nur passiv, sondern auch aktiv zu schützen. Dies führt dazu, dass - selbst im Falle einer physikalischen Beschädigung der Beschichtung - die Beschichtung das vor Korrosion zu schützende Material auf komplexe chemische Weise weiter vor Korrosion schützen kann.

Hierbei wird ausgenutzt, dass bei der Herstellung einer Beschichtung bzw. eines beschichteten Substrats mithilfe der erfindungsgemäßen Beschichtungsmischung ein polymeres Netzwerk, ein sog. Xerogel bzw. Polysiloxan-Xerogel, (durch Vernetzung des mindestens einen Silans und/oder des mindestens einen Oligosiloxans) entstehen kann, an welches die weiteren Komponenten der Mischung auf vorteilhafte Weise angelagert (z.B. adsorbiert) und/oder gebunden (z.B. kovalent gebunden) werden können, sodass eine sehr gute homogene Verteilung der Komponenten über die gesamte Beschichtung erreicht werden kann. Das Polysiloxan-Xerogel fungiert hierbei in der hergestellten Beschichtung somit als eine Art Matrix, an welche die weiteren Komponenten angelagert und/oder angebunden sein können.

Silan- bzw. Polysiloxan-Werkstoffe wurden für den Korrosionsschutz bisher nur als Dichtungsschicht verwendet. Es lassen sich auch Beispiele finden, bei denen verschiedene Metalloxid-Nanopartikel, Pflanzenextrakte oder 2D-Materialien wie Graphenoxid oder Kohlenstoff-Nanoröhrchen eingearbeitet wurden. Hierbei werden jedoch nur die passiven Korrosionsschutzeigenschaften dieser Füllstoffe/Zusatzstoffe ausgenutzt, wobei unter anderem eine erhöhte Hydrophobie oder einfache Diffusionsbarriere-Eigenschaften mit entsprechenden mechanistischen Interpretationsmöglichkeiten angestrebt werden. Wie im Rahmen der vorliegenden Erfindung herausgefunden wurde, bietet die besondere Struktur von Polysiloxan-Xerogelen mit ihrer hohen spezifischen Oberfläche und kleinen Porengröße jedoch noch weitere Möglichkeiten, um die Korrosionschemie an einem gegebenen Substrat in einer gezielten Kombination effektiv zu verändern, wobei die spezifischen Wechselwirkungen verschiedener Prozesse fein abstimmbar sind. In der Folge können verschiedene Möglichkeiten aktiver korrosionshemmender chemischer und elektrochemischer Prozesse initiiert werden, welche im Stand der Technik bisher nicht erforscht wurden.

Mit der erfindungsgemäßen Beschichtungsmischung können Beschichtungen mit einer geringen Dicke (ähnlich der von typischen Konversionsbeschichtungen) entwickelt werden. Dies hat einerseits einen eindeutig positiven wirtschaftlichen Effekt, da Schichten mit geringerer Dicke weniger Material benötigen und daher geringe Herstellungskosten haben. Zum anderen werden durch die geringe Dicke der Beschichtungen die mechanischen Eigenschaften der beschichteten Substrate positiv beeinflusst.

Das durch Vernetzung des mindestens einen Silans erhaltene Polysiloxan-Xerogel (bzw. Polysiloxan-Netzwerk) kann als Matrix für die weiteren Komponenten der Beschichtung fungieren, z.B. anstelle von Wasser oder anderen Lösungsmitteln, die nach der Beschichtung verdampfen. Dies ist insbesondere hinsichtlich der folgenden Aspekte von Bedeutung:
- Das Polysiloxan-Netzwerk ist in der Lage, Nanohohlräume zu schaffen, in denen Additive ihren Platz finden, chemische Reaktionen können lokal stattfinden, ohne dass die gesamte Oberfläche betroffen ist.
- Eine Beschichtung ohne Polysiloxan-Xerogel, z.B. auf Wasserbasis, würde lediglich zu einem sporadischen Auftreten der weiteren Komponenten auf der Substratoberfläche führen, während das intakte Polysiloxan-Netzwerk als Reservoir für die weiteren Komponenten eine homogene Verteilung dieser Komponenten in der Beschichtung ermöglicht.
- Aufgrund des Polysiloxan-Xerogels ist die erhaltene Beschichtung dicht, homogen und bedeckt die gesamte Oberfläche. Da das mindestens eine Silan für die jeweilige Anwendung entsprechend ausgewählt, modifiziert oder funktionalisiert werden kann, kann auf eine nachfolgende Grundierungsschicht verzichtet werden: Die Beschichtung selbst kann als Konversionsschicht und Haftvermittler zugleich dienen. Dies hat einerseits einen eindeutig positiven wirtschaftlichen Effekt, zum anderen werden die mechanischen Eigenschaften der beschichteten Substrate positiv beeinflusst.
- Das Polysiloxan-Netzwerk ist eine physikalische Diffusionsbarriere für korrosive Agenzien und Substanzen, u.a. Sauerstoff, Wasserstoff, Wasser etc. Durch die Funktionalisierung mit anderen (möglicherweise polyzyklischen) Molekülen kann man sich diesen Effekt als eine Art "Labyrinth" vorstellen, das diesen Stoffen den Zugang zur Metalloberfläche erschwert, indem es den Diffusionsweg verlängert. Hierbei handelt sich um eine passive Art des Korrosionsschutzes.

Durch die Kombination des mindestens einen Silans, das vernetzt in Form eines Polysiloxan-Xerogels in der hergestellten Beschichtung vorliegt, mit den weiteren Komponenten der Mischung bzw. der hergestellten Beschichtung kann nicht nur ein passiver sondern auch ein aktiver Korrosionsschutz des vor Korrosion zu schützenden Materials erreicht werden.

Zunächst wird ein aktiver Korrosionsschutz durch das Reduktionsmittel und/oder den als Reduktionsmittel fungierenden Komplexbildner erhalten. Aufgrund der Anwesenheit des speziellen Reduktionsmittels bzw. des speziellen als Reduktionsmittel fungierenden Komplexbildners in der hergestellten Beschichtung, das bzw. der die reduzierte Form eines Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein niedrigeres (bzw. negativeres) Redoxpotential (bzw. Elektrodenpotential) aufweist als das/die Redox-Paar(e) des zu schützenden Metalls (bzw. eines im vor Korrosion zu schützenden Material enthaltenen Metalls), wird gemäß den Gesetzen der Elektrochemie in einem mit der erfindungsgemäßen Beschichtungsmischung hergestellten beschichteten Substrat dieses Reduktionsmittel anstelle des zu schützenden Metalls (bzw. des im vor Korrosion zu schützenden Material enthaltenen Metalls) oxidiert. Mit anderen Worten opfert sich das Reduktionsmittel für dieses Metall, um es so vor Oxidation bzw. Korrosion zu schützen. Handelt es sich bei dem zu schützenden Metall z.B. um Aluminium, so läuft nicht die Oxidation von Aluminium gemäß der Reaktion Al → Al³⁺ + 3e⁻ ab, sondern stattdessen eine Oxidation des Reduktionsmittels, wie z.B. Ascorbinsäure, Vanillin, Melamin, und/oder vorhandenen leicht oxidierbaren Gruppen u.a. mit N- oder S-Atomen an Silan- bzw. Siloxanmolekülen. Auf diese Weise kann das vor Korrosion zu schützende Material aktiv vor Korrosion geschützt werden.

Zudem kann das mindestens eine metallhaltige Ion auf zwei verschiedene Arten zu einem aktiven Korrosionsschutz führen.

Beispielsweise kann das im metallhaltigen Ion enthaltene Metall die oxidierte Form eines Redox-Paars sein, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein höheres (bzw. positiveres) Redoxpotential (bzw. Elektrodenpotential) aufweist als das Redox-Paar O₂/H₂O und/oder das Redox-Paar O₂/OH⁻ (je nach pH-Wert). In diesem Fall würde in einem mit der erfindungsgemäßen Beschichtungsmischung hergestellten beschichteten Substrat gemäß den Gesetzen der Elektrochemie das im metallhaltigen Ion enthaltene Metall anstelle von Sauerstoff reduziert werden. Es läuft also nicht mehr die Reduktion von Sauerstoff gemäß der Reaktion ½ O₂ + 2e⁻ + 2 H⁺ → H₂O oder der Reaktion Y₂ O₂ + 2e⁻ + H₂O → 2 OH⁻ (je nach pH-Wert) ab, sondern stattdessen die Reduktion des im metallhaltigen Ion enthaltenen Metalls. Somit wird die Reduktion von Sauerstoff und damit die kathodische Reaktion der Korrosion verhindert, sodass auf diese Weise ein aktiver Korrosionschutz erreicht wird.

Aus kinetischen Gründen, sowie weil das Elektrodenpotenzial im wässrigen Medium eine Grenze hat, oder wenn das im im metallhaltigen Ion enthaltene Metall nicht die oxidierte Form eines Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein höheres (bzw. positiveres) Redoxpotential (bzw. Elektrodenpotential) aufweist als das Redox-Paar O₂/H₂O und/oder das Redox-Paar O₂/OH⁻ (je nach pH-Wert), kann das zugegebene metallhaltige Ion aber auch anders wirken, bzw. auf eine andere Weise zu einem aktiven Korrosionsschutz führen. In diesem Fall wird zwar Sauerstoff reduziert, d.h. die kathodische Reaktion der Korrosion wird nicht gestoppt. Aber die bei dieser Reaktion, d.h. der Reduktion von Sauerstoff, entstehenden Hydroxidionen werden nicht mit dem Metallkation des zu schützenden Metalls Korrosionsprodukt bilden, sondern mit dem im metallhaltigen Ion enthaltenen Metall eine schützende Metalloxid- und/oder Metallhydroxidschicht bilden, die zu einem aktiven Korrosionsschutz führt.

Durch das Reduktionsmittel bzw. den als Reduktionsmittel fungierenden Komplexbildner sowie auch durch das metallhaltige Ion können bestimmte vorteilhafte Oxidations- und Reduktionsreaktionen beschleunigt und andere schädliche unterdrückt werden, was letztlich zu einem aktiven Korrosionsschutz führt. Hierbei ist zu berücksichtigen, dass durch die verschiedenen Komponenten der Beschichtung das Redoxpotential des Redox-Paars des Reduktionsmittels bzw. des als Reduktionsmittel fungierenden Komplexbildners, das Redoxpotential des Redox-Paars des im metallhaltigen Ion enthaltenen Metalls, und auch das Redoxpotential des Redox-Paars des im vor Korrosion zu schützenden Material enthaltenen Metalls beeinflusst bzw. verändert werden. Über die verschiedenen Komponenten der Beschichtung können somit die Redoxpotential-Bedingungen fein abgestimmt werden, sodass die Redoxpotentiale der Redox-Paare der einzelnen Komponenten in so einem Verhältnis zueinander stehen, dass die gewünschten vorteilhaften Oxidations- und Reduktionsreaktionen stattfinden und die ungewünschten Oxidations- und Reduktionsreaktionen unterdrückt werden.

Ferner trägt auch der mindestens eine Komplexbildner (unabhängig von einer möglichen zusätzlichen Funktion des Komplexbildners als Reduktionsmittel) zu einem aktiven Korrosionsschutz bei. Aus kinetischen Gründen, sowie weil das Elektrodenpotenzial im wässrigen Medium eine Grenze hat, kann sich nämlich auch das im vor Korrosion zu schützenden Material enthaltene Metall zu einem gewissen Maße auflösen, d.h. das Metall kann trotz der Anwesenheit des Reduktionsmittels (bzw. des als Reduktionsmittel fungierenden Komplexbildners) in der hergestellten Beschichtung in gewissem Maße reduziert werden. Der mindestens Komplexbildner komplexiert die so oxidierten Kationen des im vor Korrosion zu schützenden Material enthaltenen Metalls, sodass die Kationen durch den Komplexbildner gebunden werden und daher nicht mehr zum Korrosionsprozess beitragen können. Mit anderen Worten kann sich kein Korrosionsprodukt mehr aus den Kationen des im vor Korrosion zu schützenden Material enthaltenen Metalls und vorhandenen Oxid- und/oder Hydroxidionen bilden. Zudem wird verhindert, dass aufgrund von Korrosionsphänomenen Kationen von der Metalloberfläche durch die Beschichtung wegdiffundieren, was nach elektrochemischen oder chemischen Reaktionen zur vollständigen Zerstörung der Schutzschicht führen würde. Da die Kationen durch die Komplexierung mit dem mindestens eine Komplexbildner jedoch gefangen sind, kann ein solches Wegdiffundieren verhindert werden. Der mindestens eine Komplexbildner kann in diesem Zusammenhang auch als potentieller Ionenaustauscher betrachtet werden.

Durch die Anwesenheit des Reduktionsmittels bzw. des als Reduktionsmittel fungierenden Komplexbildners sowie des metallhaltigen Ions in der Mischung und damit in der hergestellten Beschichtung kann somit erreicht werden, dass eine Redox-Reaktion nicht mehr (oder nur noch zu einem minimalen Anteil) zwischen Sauerstoff und einem im vor Korrosion zu schützenden Material enthaltenen Metall abläuft, sondern zwischen Sauerstoff und dem Reduktionsmittel und/oder zwischen dem Metall des metallhaltigen Ions und dem Reduktionsmittel. Da eine Oxidation des im vor Korrosion zu schützenden Material enthaltenen Metalls durch das Reduktionsmittel (bzw. den als Reduktionsmittel fungierenden Komplexbildner) eventuell nicht vollständig verhindert werden kann, wird durch die Anwesenheit des Komplexbildners erreicht, dass die durch eine solche Oxidation entstehenden Kationen des Metalls vom Komplexbildner komplexiert bzw. gebunden werden, sodass diese nicht wegdiffundieren können und nicht zu einem Korrosionprozess beitragen können. Zudem kann das metallhaltige Ion auch durch Bildung einer vor Korrosion schützenden Metalloxidschicht und/oder Metallhydroxidschicht zum Korrosionsschutz beitragen.

Die in der hergestellten Beschichtung vorhandene Polysioxanmatrix bzw. das Polysiloxan-Xerogel, welches durch Vernetzung aus dem mindestens einen Silan und/oder dem mindestens einen Oligosiloxan gebildet (bzw. hergestellt) wird, fungiert schließlich als eine Art "Container" für die Komponenten, welche, durch die Netzstruktur der Polysiloxanmatrix gleichmäßig über die ganze Oberfläche verteilt vorliegen und somit optimal vor Korrosion schützen können. Die physikalische Barrierewirkung des Polysiloxan-Xerogels hält korrosive Spezies effektiv von der Oberfläche weg. Polysiloxane lassen sich einerseits makroskopisch gesehen dicht, mit homogener Schichtdicke an metallischen Oberflächen auftragen, während sie auf der mikroskopischen Ebene innere Kavitäten (Poren) aufweisen. So haben Sauerstoff, Wasser, Chloridionen usw. längere Diffusionswege bis zur Oberfläche hin, wodurch eine weitere kinetische Verhinderung von Korrosionsprozessen möglich ist. Die Polysiloxannetzstruktur ermöglicht auch die Immobilisierung von obigen Komponenten: durch Funktionalisierung der Seitenketten ist es möglich, Reduktionsmittel oder Komplexbildner kovalent zu binden.

Die in der Mischung vorhandenen Komponenten (z.B. der Komplexbildner, das Reduktionsmittel, und/oder das mindestens eine Silan) können funktionelle Gruppen aufweisen, welche Reste von schwachen Säuren sind. So wäre auch eine gewisse Pufferkapazität gegeben: es bilden sich OH⁻-Ionen, welche die Entstehung von oben betrachteten schützenden Schichten mit dem Metall aus dem metallhaltigen Ion fördern. Als Reste von schwachen Säuren können sauerstoffhaltige funktionelle Gruppen des mindestens einen Silans eine gewisse Pufferkapazität im niedrigen alkalischen pH-Bereich bieten. Darüber hinaus verhalten sich alkalisch hydrolysierende Ionen ebenfalls als Puffermittel. In alkalischen Medien kann den Wirkungen von Säuren entgegengewirkt werden, die einen wesentlichen Beitrag zur Korrosion leisten. Außerdem können vorhandene Hydroxid-Ionen nach dem Le-Chätelier-Prinzip die Gleichgewichte von Korrosionsreaktionen verschieben, vorzugsweise die Sauerstoffreduktionsreaktionen H₂O + ½ O₂ + 2 e⁻ → 2 OH⁻ und 2 H₂O + O₂ + 2 e⁻ → H₂O₂ + 2 OH⁻, was zur Verlangsamung der kathodischen Delamination führt.

Die erfindungsgemäße Beschichtungszusammensetzung zeichnet sich insbesondere durch die folgenden vorteilhaften Eigenschaften aus:
- Ausgezeichnete Lagerstabilität, keine Sedimentations- oder Ausfällungserscheinungen zu beobachten
- Einfache Applikation mittels gängiger Techniken (Tauchen, Rakeln, Walzen, Schleudern etc.) in robuster und schneller Weise
- Möglichkeit der lokalen Anwendung/Reparatur (Sprühen, Pinseln)
- Umweltfreundlich, nachhaltig sowie energie-/umweltschonend (Niedrigtemperaturverfahren, geringer Spülwasserbedarf und damit weniger Abwasser)
- Einfache Anpassung an spezifische Kundenanforderungen, Suche nach neuen Hochleistungsadditiven

Eine mit der erfindungsgemäßen Beschichtungszusammensetzung hergestellte Beschichtung kann die folgenden vorteilhaften Eigenschaften aufweisen:
- sehr kleine Porengröße
- sehr dünne Schichten (Dicke ähnlich der von typischen Konversionsbeschichtungen) möglich, z.B. 500 nm bis 800 nm
- dichte Schicht mit körniger Morphologie; sehr gute Haftung, Partikel bleiben nach dem Bruch auf der Oberfläche (Kryobruch)
- Hervorragende Korrosionsbeständigkeit
- Verbesserte mechanische Beständigkeit
- Hervorragende Haftung auf allen Metalloberflächen sowie auf allen darunter- oder darüberliegenden Beschichtungen
   → erhöhte Kompatibilität mit typischen Beschichtungen der Automobil- und Luftfahrtindustrie
   → beliebige Kombination mit gängigen Zusammensetzungen von Basislacken, Decklacken ist denkbar, um Mehrschichtsysteme oder Hybridsysteme oder Sandwichstrukturen oder Verbundstrukturen zu bilden
- Diffusionsbarrierewirkung für Wasser und andere korrosive Stoffe
- Möglichkeit zur Lackierung, Verklebung, Bedruckung
- Möglichkeit zum chemisch kontrollierten (aktiven) Korrosionsschutz (eine Art Selbstheilung)
- geringer Inspektions- und Reparaturbedarf

Vorzugsweise ist das vor Korrosion zu schützende Material ausgewählt aus der Gruppe bestehend aus
- Aluminium;
- Eisen;
- Legierungen umfassend oder bestehend aus
   - Aluminium und/oder Eisen, sowie
   - mindestens einem Stoff ausgewählt aus der Gruppe bestehend aus Kupfer, Magnesium, Zink, Silicium, Chrom, Mangan, Kohlenstoff, und Mischungen hiervon;
- intermetallischen Phasen umfassend oder bestehend aus
   - Aluminium und/oder Eisen, sowie
   - mindestens einem Stoff ausgewählt aus der Gruppe bestehend aus Kupfer, Magnesium, Zink, Silicium, Chrom, Mangan, Kohlenstoff, und Mischungen hiervon;
- sowie Mischungen hiervon.

Besonders bevorzugt ist das vor Korrosion zu schützende Material ausgewählt aus der Gruppe bestehend aus
- Aluminium;
- Eisen;
- Stahl;
- Legierungen bestehend aus Aluminium und mindestens einem Stoff ausgewählt aus der Gruppe bestehend aus Kupfer, Magnesium, Eisen, Zink, Silicium, Chrom, Mangan, und Mischungen hiervon;
- intermetallischen Phasen bestehend aus Aluminium und mindestens einem Stoff ausgewählt aus der Gruppe bestehend aus Kupfer, Magnesium, Eisen, Zink, Silicium, Chrom, Mangan, und Mischungen hiervon;
- Legierungen bestehend aus Eisen und mindestens einem Stoff ausgewählt aus der Gruppe bestehend aus Kupfer, Magnesium, Zink, Silicium, Chrom, Mangan, und Mischungen hiervon;
- intermetallischen Phasen bestehend aus Eisen und mindestens einem Stoff ausgewählt aus der Gruppe bestehend aus Kupfer, Magnesium, Zink, Silicium, Chrom, Mangan, und Mischungen hiervon;
- sowie Mischungen hiervon.

Die erfindungsgemäße Beschichtungsmischung umfasst mindestens ein Silan und/oder mindestens ein aus dem mindestens einen Silan (durch Vernetzung) gebildetes Oligosiloxan. Das mindestens eine Oligosiloxan kann beispielsweise 2 bis 50, vorzugsweise 2 bis 30, (monomere) Untereinheiten (bzw. Siloxan-Einheiten) aufweisen.

Vorzugsweise weist das mindestens eine Silan mindestens zwei, besonders bevorzugt mindestens drei, an das Si-Atom gebundene Alkoxygruppen mit 1 bis 4 Kohlenstoffatomen auf.

Der mindestens eine Komplexbildner ist zur Komplexierung von Kationen mindestens eines im vor Korrosion zu schützenden Material enthaltenen Metalls geeignet. Vorzugsweise handelt es sich bei dem mindestens einen Komplexbildner zur Komplexierung von Kationen mindestens eines im vor Korrosion zu schützenden Material enthaltenen Metalls um mindestens einen Komplexbildner zur Komplexierung von Kationen ausgewählt aus der Gruppe bestehend aus Eisen-Kationen, Aluminium-Kationen, Kupfer-Kationen, Magnesium-Kationen, Zink-Kationen, Chrom-Kationen, Mangan-Kationen, sowie Mischungen und Kombinationen hiervon. Besonders bevorzugt handelt es sich bei dem mindestens einen Komplexbildner zur Komplexierung von Kationen mindestens eines im vor Korrosion zu schützenden Material enthaltenen Metalls um mindestens einen Komplexbildner zur Komplexierung von Aluminium-Kationen und/oder Eisen-Kationen.

Erfindungsgemäß ist vorgesehen, dass
- der mindestens eine Komplexbildner mindestens einen als Reduktionsmittel fungierenden Komplexbildner umfasst, der die reduzierte Form eines (korrespondierenden) Redox-Paars ist, welches bei Kontakt einer wässrigen Lösung (z.B. einer wässrigen Salz-Lösung oder einer wässrigen Puffer-Lösung) mit einer mit der Beschichtungsmischung (auf einem Substrat aus dem vor Korrosion zu schützenden Material) hergestellten Beschichtung in dieser wässrigen Lösung (bevorzugt bei einer Temperatur von 5 °C bis 50 °C, z.B. bei einer Temperatur von 25 °C) ein niedrigeres (bzw. negativeres) Redoxpotential aufweist als das (korrespondierende) Redox-Paar bzw. die (korrespondierenden) Redox-Paare eines im vor Korrosion zu schützenden Material enthaltenen Metalls, und/oder
- die Beschichtungsmischung zusätzlich mindestens ein Reduktionsmittel enthält, das die reduzierte Form eines (korrespondierenden) Redox-Paars ist, welches bei Kontakt einer wässrigen Lösung (z.B. einer wässrigen Salz-Lösung oder einer wässrigen Puffer-Lösung) mit einer mit der Beschichtungsmischung (auf einem Substrat aus dem vor Korrosion zu schützenden Material) hergestellten Beschichtung in dieser wässrigen Lösung (bevorzugt bei einer Temperatur von 5 °C bis 50 °C, z.B. bei einer Temperatur von 25 °C) ein niedrigeres Redoxpotential aufweist als das (korrespondierende) Redox-Paar bzw. die (korrespondierenden) Redox-Paare eines im vor Korrosion zu schützenden Material enthaltenen Metalls.

Die wässrige Salz-Lösung kann (in beiden zuvor genannten Fällen) vorzugsweise einen Salz-Anteil von 0,1 Gew.-% bis 20 Gew.-%, bevorzugt von 0,5 Gew.-% bis 15 Gew.-% (z.B. einen Salz-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweisen. Beispielweise kann es sich bei der wässrigen Salz-Lösung (in beiden zuvor genannten Fällen) um eine wässrige NaCl-Lösung handeln, welche vorzugsweise einen NaCl-Anteil von 0,1 Gew.-% bis 20 Gew.-%, bevorzugt von 0,5 Gew.-% bis 15 Gew.-% (z.B. einen NaCl-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweist.

Die wässrige Puffer-Lösung kann (in beiden zuvor genannten Fällen) vorzugsweise einen Puffer-Anteil von 0,1 Gew.-% bis 20 Gew.-%, bevorzugt von 0,5 Gew.-% bis 15 Gew.-% (z.B. einen Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweisen. Beispielweise kann es sich bei der wässrigen Puffer-Lösung (in beiden zuvor genannten Fällen) um eine wässrige Natriumtetraborat/Borsäure-Puffer-Lösung handeln, die vorzugsweise einen Natriumtetraborat/Borsäure-Puffer-Anteil von 0,1 Gew.-% bis 20 Gew.-%, bevorzugt von 0,5 Gew.-% bis 15 Gew.-% (z.B. einen Natriumtetraborat/Borsäure-Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweist.

Das Merkmal, dass das mindestens eine Reduktionsmittel bzw. der mindestens eine als Reduktionsmittel fungierende Komplexbildner die reduzierte Form eines Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein niedrigeres (bzw. negativeres) Redoxpotential aufweist als das/die Redox-Paar(e) eines im vor Korrosion zu schützenden Material enthaltenen Metalls, kann mithilfe der zyklischen Voltametrie nachgewiesen werden. Hierbei kann durch die zyklische Voltametrie ermittelt werden, welche Redox-Reaktion in welchem Maße abläuft. Wird dabei ermittelt, dass lediglich das mindestens eine Reduktionsmittel bzw. der mindestens eine als Reduktionsmittel fungierende Komplexbildner oxidiert wird, wohingegen das im vor Korrosion zu schützenden Material enthaltene Metall nicht oxidiert wird, ist das ein klarer Beleg dafür, dass das genannte Merkmal erfüllt ist. Hierbei kann z.B. ein Spannungsvorschub (Scanrate) von 20 mV/s sowie ein 3-Elektrodensystem eingesetzt werden, wobei die Messung z.B. bei einer Temperatur von 25 °C und/oder z.B. in einer wässrigen NaCl-Lösung mit einem NaCl-Anteil von 3,5 Gew.-%, bezogen auf die Gesamtmasse der Lösung, und/oder einem pH-Wert von 7; oder einer wässrigen Natriumtetraborat/Borsäure-Puffer-Lösung mit einem Natriumtetraborat/Borsäure-Puffer-Anteil von 3,5 Gew.-%, bezogen auf die Gesamtmasse der Lösung, und/oder einem pH-Wert von 8,5 durchgeführt werden kann.

Die zyklische Voltametrie dient zur Nachverfolgung elektrochemischer (Redox-)Reaktionen unter bestimmten Bedingungen. Hierbei wird ein Potenzialbereich (sowohl anodische - oxidativ, als auch kathodische - reduktive Richtung) abgescannt, und in der Abhängigkeit des Potenzials der Strom gemessen. Dies ist als nichtstationärer Zustand zu verstehen, wo sich die unterschiedlichen Reaktionen als "Strompeaks" melden: die einzelnen Peaks sind für eine bestimmte Reaktion charakteristisch, wobei der Ort des Peaks eine qualitative Aussage gibt (d.h. welche Reaktion? welcher Stoff?) und die Höhe des Peaks eine quantitative Aussage gibt (d.h. wie intensiv ist die Reaktion?). Wenn man durch Auftreten bestimmter Peaks das Auflösen von Aluminium sowie die Sauerstoffreduktionsreaktion im Falle einer unbeschichteten Probe feststellen kann, für die beschichtete Probe diese Peaks aber verschwinden, und andere dafür erscheinen (z.B. die Peaks für das zugegebene metallhaltige Ion und/oder die Peaks für das Reduktionsmittel bzw. für den als Reduktionsmittel fungierenden Komplexbildner), ist dies ein klarer Beleg dafür, dass diese Stoffe in der Beschichtung (d.h. das metallhaltige Ion und/oder das Reduktionsmittel bzw. der als Reduktionsmittel fungierende Komplexbildner) die eigentlichen Reaktanden (des ablaufenden Redox-Prozesses) sind, während die Korrosionsprozesse (d.h. eine Korrosion des vor Korrosion zu schützenden Materials des Substrats) supprimiert werden und somit das im vor Korrosion zu schützenden Material enthaltene Metall nicht oxidiert wird. Solche Messungen werden in der Regel unter definierten Bedingungen durchgeführt, z.B. 3,5 % (m/m) NaCl-Lösung (oder Natriumtetraborat/Borsäure-Puffer, pH 8,5), 25 °C, 20 mV/s Spannungsvorschub (Scanrate), 3-Elektrodensystem.

Unter dem Merkmal, dass das mindestens eine Reduktionsmittel bzw. der mindestens eine als Reduktionsmittel fungierende Komplexbildner die reduzierte Form eines Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein niedrigeres (bzw. negativeres) Redoxpotential aufweist als das/die Redox-Paar(e) eines im vor Korrosion zu schützenden Material enthaltenen Metalls, ist zu verstehen, dass das mindestens eine Reduktionsmittel bzw. der mindestens eine als Reduktionsmittel fungierende Komplexbildner die reduzierte Form eines Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein Redoxpotential aufweist, das niedriger (bzw. negativer) ist als das Redoxpotential des Redox-Paares bzw. die Redoxpotentiale der Redox-Paare eines (vorzugsweise jedes) im vor Korrosion zu schützenden Material enthaltenen Metalls(, welches mit dieser wässrigen Lösung in Kontakt steht).

Vorzugsweise enthält das mindestens eine metallhaltige Ion mindestens ein Metall, das
- die oxidierte Form eines (korrespondierenden) Redox-Paars ist, welches bei Kontakt einer wässrigen Lösung (z.B. einer wässrigen Salz-Lösung oder einer wässrigen Puffer-Lösung) mit einer mit der Beschichtungsmischung (auf einem Substrat aus dem vor Korrosion zu schützenden Material) hergestellten Beschichtung in dieser wässrigen Lösung (bevorzugt bei einer Temperatur von 5 °C bis 50 °C, z.B. bei einer Temperatur von 25 °C) ein höheres (bzw. positiveres) Redoxpotential aufweist als das (korrespondierende) Redox-Paar O₂/H₂O und/oder das (korrespondierende) Redox-Paar O₂/OH⁻ (je nach pH-Wert), und/oder
- mit Hydroxid-Anionen und/oder Oxid-Anionen eine Metallhydroxid- und/oder Metalloxid-Schicht bilden kann (bzw. bei Kontakt einer wässrigen Lösung mit einem mit der Beschichtungsmischung hergestellten beschichteten Substrat mit Hydroxid-Anionen und/oder Oxid-Anionen eine Metallhydroxid- und/oder Metalloxid-Schicht bildet).

Die wässrige Salz-Lösung kann vorzugsweise einen Salz-Anteil von 0,1 Gew.-% bis 20 Gew.-%, bevorzugt von 0,5 Gew.-% bis 15 Gew.-% (z.B. einen Salz-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweisen. Beispielweise kann es sich bei der wässrigen Salz-Lösung um eine wässrige NaCl-Lösung handeln, welche vorzugsweise einen NaCl-Anteil von 0,1 Gew.-% bis 20 Gew.-%, bevorzugt von 0,5 Gew.-% bis 15 Gew.-% (z.B. einen NaCl-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweist.

Die wässrige Puffer-Lösung kann vorzugsweise einen Puffer-Anteil von 0,1 Gew.-% bis 20 Gew.-%, bevorzugt von 0,5 Gew.-% bis 15 Gew.-% (z.B. einen Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweisen. Beispielweise kann es sich bei der wässrigen Puffer-Lösung um eine wässrige Natriumtetraborat/Borsäure-Puffer-Lösung handeln, die vorzugsweise einen Natriumtetraborat/Borsäure-Puffer-Anteil von 0,1 Gew.-% bis 20 Gew.-%, bevorzugt von 0,5 Gew.-% bis 15 Gew.-% (z.B. einen Natriumtetraborat/Borsäure-Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweist.

Das Merkmal, dass das im mindestens einen metallhaltigen Ion enthaltene Metall die oxidierte Form eines Redox-Paars ist, welches bei Kontakt einer wässrigen Lösung mit einer mit der Beschichtungsmischung (auf einem Substrat aus dem vor Korrosion zu schützenden Material) hergestellten Beschichtung in dieser wässrigen Lösung ein höheres (bzw. positiveres) Redoxpotential als das Redox-Paar O₂/H₂O und/oder das Redox-Paar O₂/OH⁻ (je nach pH-Wert), kann mithilfe der zyklischen Voltametrie nachgewiesen werden. Hierbei kann durch die zyklische Voltametrie ermittelt werden, welche Redox-Reaktion in welchem Maße abläuft. Wird dabei ermittelt, dass lediglich das im mindestens einen metallhaltigen Ion enthaltene Metall reduziert wird, wohingegen Sauerstoff nicht reduziert wird, ist das klarer Beleg dafür, dass das genannte Merkmal erfüllt ist. Hierbei kann z.B. ein Spannungsvorschub (Scanrate) von 20 mV/s sowie ein 3-Elektrodensystem eingesetzt werden, wobei die Messung z.B. bei einer Temperatur von 25 °C und/oder z.B. in einer wässrigen NaCl-Lösung mit einem NaCl-Anteil von 3,5 Gew.-%, bezogen auf die Gesamtmasse der Lösung, und/oder einem pH-Wert von 7; oder einer wässrigen Natriumtetraborat/Borsäure-Puffer-Lösung mit einem Natriumtetraborat/Borsäure-Puffer-Anteil von 3,5 Gew.-%, bezogen auf die Gesamtmasse der Lösung, und/oder einem pH-Wert von 8,5 durchgeführt werden kann.

Vorzugsweise handelt es sich bei dem mindestens einen metallhaltigen Ion um mindestens ein Metallkation, um mindestens ein (Metall-)Oxoanion, oder um eine Mischung (oder Kombination) aus mindestens einem Metallkation und mindestens einem (Metall-)Oxoanion.

Vorzugsweise umfasst das mindestens eine metallhaltige Ion ein Metall, das mehrere, bevorzugt mindestens drei, besonders bevorzugt mindestens vier, positive Oxidationsstufen annehmen kann. Besonders bevorzugt handelt es sich bei dem mindestens einen metallhaltigen Ion um ein (Metall-)Oxoanion, das ein Metall umfasst, welches mehrere, bevorzugt mindestens drei, besonders bevorzugt mindestens vier, positive Oxidationsstufen annehmen kann.

Vorzugsweise enthält das mindestens eine metallhaltige Ion kein Cr(III) und kein Cr(VI). Besonders bevorzugt enthält das mindestens eine metallhaltige Ion kein Chrom (d.h. kein Chrom jeglicher Oxidationsstufe), insbesondere weder in Form von Chromkationen, noch in Form von Chrom-Oxoanionen bzw. Chromat.

Vorzugsweise enthält die erfindungsgemäße Beschichtungsmischung kein Cr(III) und kein Cr(VI). Besonders bevorzugt enthält die erfindungsgemäße Beschichtungsmischung kein Chrom (d.h. kein Chrom jeglicher Oxidationsstufe), insbesondere weder in Form von Chromkationen, noch in Form von Chrom-Oxoanionen bzw. Chromat.

Vorzugsweise enthält die erfindungsgemäße Beschichtungsmischung keine toxischen Verbindungen, keine Chromspezies, keine fluorhaltigen Stoffe, und/oder keine phosphathaltigen Verbindungen.

Vorzugsweise handelt es sich bei dem mindestens einen Lösungsmittel um Wasser, um mindestens ein sauerstoffhaltiges organisches Lösungsmittel, oder um eine Mischung aus Wasser und mindestens einem sauerstoffhaltigen organischen Lösungsmittel.

Die Beschichtungsmischung kann in Form einer Lösung oder einer Dispersion (z.B. Suspension) vorliegen. Vorzugsweise liegt die Beschichtungsmischung als Lösung oder kolloidale Lösung vor.

Die erfindungsgemäße Beschichtungsmischung kann beispielsweise dadurch hergestellt werden, dass die einzelnen Bestandteile der herzustellenden Beschichtungsmischung miteinander vermischt werden. Hinsichtlich des mindestens einen Silans ist dabei anzumerken, dass dieses bei der Herstellung der Beschichtungsmischung optional zumindest teilweise zu mindestens einem Oligosiloxan vernetzt werden kann. Dies kann beispielsweise dadurch erreicht werden, dass während der Herstellung mit einer Säure (z.B. Essigsäure) ein saurer pH-Wert in der Mischung eingestellt wird, der die Vernetzung begünstigt, und am Ende der Herstellung mit einer Base (z.B. Natriumcarbonat) ein alkalischer pH-Wert in der Mischung eingestellt wird, wodurch die Vernetzung gestoppt wird. Sollte die Beschichtungsmischung ein Silan mit einer Epoxygruppe enthalten, kann zusätzlich ein Katalysator (z.B. Bortrifluorid-Etherat-Katalysator) zur Öffnung der Epoxy-Gruppen verwendet werden, d.h. während der Herstellung zur Beschichtungsmischung hinzugegeben werden.

Eine bevorzugte Ausführungsform der erfindungsgemäßen Beschichtungsmischung zeichnet sich dadurch aus, dass
- das mindestens eine Silan mindestens ein erstes Silan und mindestens ein zweites Silan umfasst, wobei das mindestens eine erste Silan und das mindestens eine zweite Silan jeweils mindestens eine, bevorzugt mindestens zwei, besonders bevorzugt mindestens drei, an das Si-Atom gebundene Alkoxygruppe mit 1 bis 4 Kohlenstoffatomen aufweisen und wobei das mindestens eine erste Silan und/oder das mindestens eine zweite Silan jeweils zusätzlich eine an das Si-Atom gebundene Gruppe aufweist, die jeweils unabhängig voneinander ausgewählt ist aus der Gruppe bestehend aus Alkylgruppen mit 1 bis 4 Kohlenstoffatomen, die eine oder mehrere Gruppen ausgewählt aus Aminogruppen, Organosulfonylgruppen, Epoxygruppen und Kombinationen hiervon aufweisen können, und Alkoxyalkylgruppen, die eine oder mehrere Gruppen ausgewählt aus Aminogruppen, Organosulfonylgruppen, Epoxygruppen und Kombination hiervon aufweisen können, und/oder
- es sich bei dem mindestens einen Silan um mindestens ein funktionalisiertes Silan handelt, wobei das mindestens eine Silan vorzugsweise mit dem mindestens einen Komplexbildner, mit dem mindestens einen Reduktionsmittel, und/oder mit einem Stoff ausgewählt aus der Gruppe bestehend aus Phenolhydroxiden, Lactaten, Carboxylaten, sowie Kombinationen hiervon, funktionalisiert ist.

Das mindestens eine Silan kann funktionalisiert sein. Funktionalisierte Moleküle können verschiedene funktionelle Gruppen tragen, wie z.B. Phenolhydroxide, Lactate, Carboxylate, die bei unterschiedlichen, durch pKs-Werte definierten, meist höheren pH-Werten deprotoniert vorliegen. Das heißt, sie können Gegenionen verschiedener Kationen sein (Salzbildung). Darüber hinaus sind sie aufgrund der verschiedenen sauerstoffhaltigen funktionellen Gruppen in der Lage, Komplexe mit Kationen zu bilden, besonders wichtig sind hier Eisen-, Aluminium-Ionen und Ionen anderer Legierungselemente. Mehrere mehrzähnige funktionalisierte Moleküle, die auf molekularer Ebene dicht beieinander angeordnet sind, können sich sogar wie Kryptanden verhalten, was die Bezeichnung für eine Familie synthetischer bizyklischer und polyzyklischer mehrzähniger Liganden zur Komplexierung von Kationen ist (insbesondere in der bioanorganischen Chemie verwendet).

Es ist möglich, dass der mindestens eine Komplexbildner teilweise funktionalisiert an das mindestens eine Silan und teilweise separat (d.h. nicht funktionalisiert an das mindestens eine Silan) in der Beschichtungsmischung vorliegt.

Es ist möglich, dass das mindestens eine Reduktionsmittel teilweise funktionalisiert an das mindestens eine Silan und teilweise separat (d.h. nicht funktionalisiert an das mindestens eine Silan) in der Beschichtungsmischung vorliegt.

Vorzugsweise umfasst das Silan ein Silan gemäß einer der folgenden Strukturformeln (I) bis (III) oder mehrere Silane gemäß einer oder mehrerer der folgenden Strukturformeln (I) bis (III): 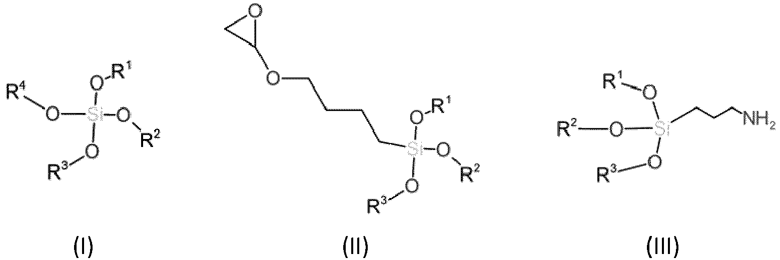 wobei die R¹, R², R³ und R⁴ jeweils unabhängig voneinander ausgewählt sind aus der Gruppe bestehend aus Methyl, Ethyl, Propyl und Butyl.

Eine weitere bevorzugte Ausführungsform der erfindungsgemäßen Beschichtungsmischung zeichnet sich dadurch aus, dass
- der mindestens eine Komplexbildner mindesten ein Komplexbildner zur Komplexierung von Kationen ausgewählt aus der Gruppe bestehend aus Aluminiumkationen, Eisenkationen, Kupferkationen, Magnesiumkationen, Zinkkationen, Chromkationen, Mangankationen, und Mischungen hiervon ist, wobei der mindestens eine Komplexbildner vorzugsweise ausgewählt ist aus der Gruppe bestehend aus Alizarin S (Alizarinrot); 2,2',2",2"'-(Ethan-1,2-diyldinitrilo)tetraessigsäure (EDTA) und deren Salze; 2,2',2",2"'-[(1R,2R)-1,2-Cyclohexandiyldinitrilo]tetraessigsäure (CDTA) und deren Salze; Ethylenglycol-bis(β-aminoethyl-ether)-N,N,N',N'-tetraessigsäure (EGTA) und deren Salze; Ascorbinsäure ((5R)-[(1S)-1, 2-Dihydroxyethyl]-3,4-dihydroxyfuran-2(5H)-on) und deren Isomere, Konjugate und Salze; Cyanusäure (1,3,5-Triazinan-2,4,6-trion) und deren Isomere und Salze; Weinsäure (2,3-Dihydroxybernsteinsäure) und deren Isomere und Salze; 1,4-Dioxan; Melamin (1,3,5-Triazin-2,4,6-triamin) und dessen Isomere und Derivate; Thioharnstoff; Cystein; sowie Mischungen hiervon, und/oder
- der mindestens eine als Reduktionsmittel fungierende Komplexbildner ausgewählt ist aus der Gruppe bestehend aus Ascorbinsäure und deren Isomere, Konjugate und Salze; Melamin; Thioharnstoff; Cystein; und dessen Isomere und Derivate; sowie Mischungen hiervon, und/oder
- das mindestens eine Reduktionsmittel ausgewählt ist aus der Gruppe bestehend aus Vanillin (4-Hydroxy-3-methoxybenzaldehyd) und dessen Isomere (z.B. Isovanilin bzw. 3-Hydroxy-4-methoxybenzaldehyd) und Homologe (z.B. Ethylvanillin bzw. 3-Ethoxy-4-hydroxybenzaldehyd), Bisulphiten, Sulphiten, Dithioniten, Glutathion, Polyphenolen, sowie Mischungen hiervon, und/oder
- das mindestens eine metallhaltige Ion ausgewählt ist aus der Gruppe bestehend aus Alkalimetall-Kationen, Erdalkalimetall-Kationen, Übergangsmetall-Kationen, Lanthanoid-Kationen, Oxoanionen, sowie Mischungen hiervon, wobei das mindestens eine metallhaltige Ion bevorzugt ausgewählt ist aus der Gruppe bestehend aus Cer(III)-Kationen, Cer(IV)-Kationen, Lithium-Kationen, Natrium-Kationen, Molybdän-Oxoanionen, Mangan-Oxoanionen, sowie Mischungen hiervon, und/oder
- das mindestens eine Lösungsmittel ausgewählt ist aus der Gruppe bestehend aus Wasser; Alkoholen, bevorzugt Ethanol, Isopropanol; Butylacetat; Fruchtsäureestern, und Mischungen hiervon, und/oder
- das vor Korrosion zu schützende Material ausgewählt ist aus der Gruppe bestehend aus Aluminium; Eisen; Legierungen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff, und Mischungen hiervon; intermetallischen Phasen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff und Mischungen hiervon; sowie Mischungen hiervon.

Der mindestens eine Komplexbildner kann vorzugsweise ausgewählt sein aus der Gruppe bestehend aus Carboxylaten; Lactaten; Phenolhydroxiden; Kronenethern (z.B. 1,4-Dioxan); Alizarin S (Alizarinrot); 2,2',2",2‴-(Ethan-1,2-diyldinitrilo)tetraessigsäure (EDTA) und deren Salze; 2,2',2",2"'-[(1R,2R)-1,2-Cyclohexandiyldinitrilo]tetraessigsäure (CDTA) und deren Salze; Ethylenglycol-bis(β-aminoethylether)-N,N,N',N'-tetraessigsäure (EGTA) und deren Salze; Ascorbinsäure ((5R)-[(1S)-1, 2-Dihydroxyethyl]-3,4-dihydroxyfuran-2(5H)-on) und deren Isomere, Konjugate und Salze; Cyanusäure (1,3,5-Triazinan-2,4,6-trion) und deren Isomere und Salze; Weinsäure (2,3-Dihydroxybernsteinsäure) und deren Isomere und Salze; 1,4-Dioxan; Melamin und dessen Isomere und Derivate; sowie Mischungen hiervon.

Gemäß einer weiteren bevorzugten Ausführungsform der erfindungsgemäßen Beschichtungsmischung enthält die Beschichtungsmischung
- Nanopartikel, die vorzugsweise ausgewählt sind aus der Gruppe bestehend aus Titanoxid-Nanopartikeln, Wolframoxid-Nanopartikeln, Aluminiumoxid-Nanopartikeln, Siliciumdioxid-Nanopartikeln, und Mischungen hiervon, und/oder
- mindestens eine Base, die vorzugsweise ausgewählt ist aus der Gruppe bestehend aus Natriumcarbonat, Lithiumcarbonat, Kaliumcarbonat, und Mischungen hiervon, und/oder
- mindestens ein Additiv ausgewählt aus der Gruppe bestehend aus Haftvermittlern, Pigmenten, Füllstoffen, und Mischungen hiervon.

Die mindestens eine Beschichtungsmischung kann Nanopartikel enthalten. Durch diese kann eine Verbesserung der Optik und/oder eine verbesserte Bedruckbarkeit der hergestellten Beschichtung erreicht werden.

Abhängig von der spezifischen Verwendung der erfindungsgemäßen Beschichtungsmischung können geeignete Additive (Haftvermittler, Pigmente, Füllstoffe) verwendet werden, die den spezifischen Bedürfnissen einer bestimmten Anwendung entsprechen.

Eine weitere bevorzugte Ausführungsform der erfindungsgemäßen Beschichtungsmischung ist dadurch gekennzeichnet, dass die Beschichtungsmischung
- 5 Gew.-% bis 60 Gew.-%, bevorzugt 5 Gew.-% bis 25 Gew.-%, des mindestens einen Silans und/oder des mindestens einen Oligosiloxans, bezogen auf die Gesamtmasse der Mischung, und/oder
- 100 ppm bis 5000 ppm, bevorzugt 100 ppm bis 250 ppm, des mindestens einen Komplexbildners, bezogen auf die Gesamtmasse der Mischung, und/oder
- 100 ppm bis 5000 ppm, bevorzugt 100 ppm bis 250 ppm, des mindestens einen Reduktionsmittels, bezogen auf die Gesamtmasse der Mischung, und/oder
- 1 bis 100 ppm, bevorzugt 5 bis 10 ppm, des mindestens einen metallhaltigen Ions, bezogen auf die Gesamtmasse der Mischung, und/oder
- 100 ppm bis 1000 ppm, bevorzugt 100 ppm bis 250 ppm, Nanopartikel, bezogen auf die Gesamtmasse der Mischung, und/oder,
- 100 ppm bis 5000 ppm Gew.-%, bevorzugt 100 ppm bis 500 ppm Gew.-%, mindestens eines Additivs, bezogen auf die Gesamtmasse der Mischung,
enthält.

Zudem betrifft die vorliegende Erfindung auch ein Verfahren zur Herstellung beschichteter Substrate, bei welchem
a) mindestens eine Schicht einer Beschichtungsmischung gemäß einem der vorhergehenden Ansprüche auf mindestens einen Bereich einer Oberfläche mindestens eines Substrats aus vor Korrosion zu schützendem Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, aufgebracht wird, und
b) die mindestens eine aufgebrachte Schicht mindestens einem Aushärtungsprozess unterzogen wird, bei welchem das mindestens eine Silan und/oder das mindestens eine Oligosiloxan zu einem (Polysiloxan-)Xerogel vernetzt wird.

Eine bevorzugte Variante des erfindungsgemäßen Verfahrens zeichnet sich dadurch aus, dass
- das Aufbringen der mindestens einen Schicht in Schritt a) mittels mindestens eines Auftragsprozesses erfolgt der ausgewählt ist aus der Gruppe bestehend aus Tauchen, Rakeln, Walzen, Schleudern, Sprühen, Pinseln, Streichen, und Kombinationen hiervon, und/oder
- das Substrat vor Schritt a) mindestens einer Vorbehandlung unterzogen wird, die vorzugsweise ausgewählt ist aus der Gruppe bestehend aus Reinigen, Sandstrahlen, Polieren, Entfetten, alkalischem Ätzen, saurem Ätzen, Plasmabehandlung, Laserbehandlung, sowie Kombinationen hiervon.

Eine weitere bevorzugte Variante des erfindungsgemäßen Verfahrens ist dadurch gekennzeichnet, dass der mindestens eine Aushärtungsprozess in Schritt b)
- bei einer Temperatur von 60 °C bis 120 °C, bevorzugt von 70 °C bis 100 °C, besonders bevorzugt von 80 °C bis 90 °C, und/oder
- für eine Dauer von 5 min bis 8 h, bevorzugt von 30 min bis 4 h, besonders bevorzugt von 45 min bis 2 h,
erfolgt.

Gemäß einer weiteren bevorzugten Variante des erfindungsgemäßen Verfahrens wird die mindestens einen Schicht in einer Dicke von 500 nm bis 800 nm aufgebracht.

Eine weitere bevorzugte Variante des erfindungsgemäßen Verfahrens zeichnet sich dadurch aus, dass das vor Korrosion zu schützende Material ausgewählt ist aus der Gruppe bestehend aus
- Aluminium;
- Eisen;
- Legierungen umfassend oder bestehend aus
   - Aluminium und/oder Eisen, sowie
   - mindestens einem Stoff ausgewählt aus der Gruppe bestehend aus Kupfer, Magnesium, Zink, Silicium, Chrom, Mangan, Kohlenstoff, und Mischungen hiervon;
- intermetallischen Phasen umfassend oder bestehend aus
   - Aluminium und/oder Eisen, sowie
   - mindestens einem Stoff ausgewählt aus der Gruppe bestehend aus Kupfer, Magnesium, Zink, Silicium, Chrom, Mangan, Kohlenstoff und Mischungen hiervon;
- sowie Mischungen hiervon.

Eine besonders bevorzugte Variante des erfindungsgemäßen Verfahrens zeichnet sich dadurch aus, dass das vor Korrosion zu schützende Material ausgewählt aus der Gruppe bestehend aus
- Aluminium;
- Eisen;
- Stahl;
- Legierungen bestehend aus Aluminium und mindestens einem Stoff ausgewählt aus der Gruppe bestehend aus Kupfer, Magnesium, Eisen, Zink, Silicium, Chrom, Mangan, und Mischungen hiervon;
- intermetallischen Phasen bestehend aus Aluminium und mindestens einem Stoff ausgewählt aus der Gruppe bestehend aus Kupfer, Magnesium, Eisen, Zink, Silicium, Chrom, Mangan, und Mischungen hiervon;
- Legierungen bestehend aus Eisen und mindestens einem Stoff ausgewählt aus der Gruppe bestehend aus Kupfer, Magnesium, Zink, Silicium, Chrom, Mangan, und Mischungen hiervon;
- intermetallischen Phasen bestehend aus Eisen und mindestens einem Stoff ausgewählt aus der Gruppe bestehend aus Kupfer, Magnesium, Zink, Silicium, Chrom, Mangan, und Mischungen hiervon;
- sowie Mischungen hiervon.

Als Substratwerkstoffe kommen beispielsweise in Frage: Aluminiumlegierungen der 2000er, 5000er, 6000er und 7000er Reihe, insbesondere AA2024, AA7075, aber auch AlMg1, AlMg3, Al99,5 Zusammensetzungen, ferner niedriglegierter Stahl, z.B. S355, DC04 und Edelstahl, z.B. 1.4301. Von besonderer Bedeutung ist die Aluminiumzusammensetzung AA2024-T3 mit dem Hauptlegierungselement Kupfer (3,8-4,9 %), das feine intermetallische Partikel (härtende Ausscheidungen, Dispersoide, Einschlüsse) bildet, die für ein hohes Festigkeits-Gewichts-Verhältnis und eine gute Ermüdungsbeständigkeit in der Luftfahrtindustrie unerlässlich sind. Intermetallische Phasen, die Korrosionsprozesse in Gang setzen, können zu Lochfraß und Spannungsrisskorrosion führen (da sie aktive kathodische Stellen sind, an denen die Sauerstoffreduktionsreaktion stattfinden kann).

Die Substrate, auf die die erfindungsgemäßen Beschichtungen aufgebracht werden können, können beliebige Formen haben: einfache (Metall-)Teile oder komplexe, maschinell bearbeitete Teile und alle geometrischen Zusammensetzungen davon. Je nach den Erfordernissen eines bestimmten Industriezweigs können die Substrate vor dem Aufbringen der erfindungsgemäßen Beschichtung einer Vorbehandlung unterzogen werden. Die Vorbehandlung kann aus mechanischen Schritten bestehen, z.B. Sandstrahlen, Polieren, und auch aus chemischen Schritten. Letztere können Entfettungstechniken, alkalisches und saures Ätzen (Beizen), alkalische Konditionierung unter Verwendung von Chemikalien und anderen kommerziellen Produkten, die in derjeweiligen Branche zugelassen und zertifiziert sind, umfassen. Physikalische Vorbehandlungsmethoden sind ebenfalls denkbar, z.B. Plasma- oder Lasertechnologien.

Ferner betrifft die vorliegende Erfindung auch ein beschichtetes Substrat, umfassend ein metallhaltiges Substrat aus einem vor Korrosion zu schützenden Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, und
mindestens eine auf mindestens einem Bereich einer Oberfläche des Substrats angeordnete Beschichtung enthaltend ein (Polysiloxan-)Xerogel sowie mindestens einen Komplexbildner zur Komplexierung von Kationen mindestens eines im vor Korrosion zu schützenden Material enthaltenen Metalls, und mindestens ein metallhaltiges Ion,
wobei das (Polysiloxan-)Xerogel (durch Vernetzung) aus mindestens einem Silan (und/oder mindestens einem aus dem mindestens einen Silan gebildeten Oligosiloxan) gebildet (bzw. hergestellt) ist, wobei das mindestens eine Silan mindestens eine an das Si-Atom gebundene Alkoxygruppe mit 1 bis 4 Kohlenstoffatomen aufweist,
   und wobei
   - der mindestens eine Komplexbildner mindestens einen (zusätzlich) als Reduktionsmittel fungierenden Komplexbildner umfasst, der die reduzierte Form eines (korrespondierenden) Redox-Paars ist, welches bei Kontakt einer wässrigen Lösung (z.B. einer wässrigen Salz-Lösung oder einer wässrigen Puffer-Lösung) mit der mindestens einen Beschichtung in dieser wässrigen Lösung (bevorzugt bei einer Temperatur von 5 °C bis 50 °C, z.B. bei einer Temperatur von 25 °C) ein niedrigeres Redoxpotential aufweist als das/die (korrespondierende bzw. korrespondierenden) Redox-Paar(e) eines im vor Korrosion zu schützenden Material enthaltenen Metalls, vorzugsweise als das/die (korrespondierende bzw. korrespondierenden) Redox-Paar(e) jedes im vor Korrosion zu schützenden Material enthaltenen Metalls, und/oder
   - die Beschichtung zusätzlich mindestens ein Reduktionsmittel enthält, das die reduzierte Form eines (korrespondierenden) Redox-Paars ist, welches bei Kontakt einer wässrigen Lösung (z.B. einer wässrigen Salz-Lösung oder einer wässrigen Puffer-Lösung) mit der mindestens einen Beschichtung in dieser wässrigen Lösung (bevorzugt bei einer Temperatur von 5 °C bis 50 °C, z.B. bei einer Temperatur von 25 °C) ein niedrigeres Redoxpotential aufweist als das/die (korrespondierende bzw. korrespondierenden) Redox-Paar(e) eines im vor Korrosion zu schützenden Material enthaltenen Metalls, vorzugsweise als das/die (korrespondierende bzw. korrespondierenden) Redox-Paar(e) jedes im vor Korrosion zu schützenden Material enthaltenen Metalls.

Die wässrige Salz-Lösung kann (in beiden zuvor genannten Fällen) vorzugsweise einen Salz-Anteil von 0,1 Gew.-% bis 20 Gew.-%, bevorzugt von 0,5 Gew.-% bis 15 Gew.-% (z.B. einen Salz-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweisen. Beispielweise kann es sich bei der wässrigen Salz-Lösung (in beiden zuvor genannten Fällen) um eine wässrige NaCl-Lösung handeln, welche vorzugsweise einen NaCl-Anteil von 0,1 Gew.-% bis 20 Gew.-%, bevorzugt von 0,5 Gew.-% bis 15 Gew.-% (z.B. einen NaCl-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweist.

Die wässrige Puffer-Lösung kann (in beiden zuvor genannten Fällen) vorzugsweise einen Puffer-Anteil von 0,1 Gew.-% bis 20 Gew.-%, bevorzugt von 0,5 Gew.-% bis 15 Gew.-% (z.B. einen Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweisen. Beispielweise kann es sich bei der wässrigen Puffer-Lösung (in beiden zuvor genannten Fällen) um eine wässrige Natriumtetraborat/Borsäure-Puffer-Lösung handeln, die vorzugsweise einen Natriumtetraborat/Borsäure-Puffer-Anteil von 0,1 Gew.-% bis 20 Gew.-%, bevorzugt von 0,5 Gew.-% bis 15 Gew.-% (z.B. einen Natriumtetraborat/Borsäure-Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweist.

Das Merkmal, dass das mindestens eine Reduktionsmittel bzw. der mindestens eine als Reduktionsmittel fungierende Komplexbildner die reduzierte Form eines Redox-Paars ist, welches bei Kontakt einer wässrigen Lösung mit der mindestens einen Beschichtung in dieser wässrigen Lösung ein niedrigeres (bzw. negativeres) Redoxpotential aufweist als das/die Redox-Paar(e) eines im vor Korrosion zu schützenden Material enthaltenen Metalls, kann mithilfe der zyklischen Voltametrie nachgewiesen werden. Hierbei kann durch die zyklische Voltametrie ermittelt werden, welche Redox-Reaktion in welchem Maße abläuft. Wird dabei ermittelt, dass lediglich das mindestens eine Reduktionsmittel bzw. der mindestens eine als Reduktionsmittel fungierende Komplexbildner oxidiert wird, wohingegen das im vor Korrosion zu schützenden Material enthaltene Metall nicht oxidiert wird, ist das klarer Beleg dafür, dass das genannte Merkmal erfüllt ist. Hierbei kann z.B. ein Spannungsvorschub (Scanrate) von 20 mV/s sowie ein 3-Elektrodensystem eingesetzt werden, wobei die Messung z.B. bei einer Temperatur von 25 °C und/oder z.B. in einer wässrigen NaCl-Lösung mit einem NaCl-Anteil von 3,5 Gew.-%, bezogen auf die Gesamtmasse der Lösung, und/oder einem pH-Wert von 7; oder einer wässrigen Natriumtetraborat/Borsäure-Puffer-Lösung mit einem Natriumtetraborat/Borsäure-Puffer-Anteil von 3,5 Gew.-%, bezogen auf die Gesamtmasse der Lösung, und/oder einem pH-Wert von 8,5 durchgeführt werden kann.

Unter dem Merkmal, dass das mindestens eine Reduktionsmittel bzw. der mindestens eine als Reduktionsmittel fungierende Komplexbildner die reduzierte Form eines Redox-Paars ist, welches bei Kontakt einer wässrigen Lösung mit der mindestens einen Beschichtung in dieser wässrigen Lösung ein niedrigeres (bzw. negativeres) Redoxpotential aufweist als das/die Redox-Potentiale eines im vor Korrosion zu schützenden Material enthaltenen Metalls, ist zu verstehen, dass das mindestens eine Reduktionsmittel bzw. der mindestens eine als Reduktionsmittel fungierende Komplexbildner die reduzierte Form eines Redox-Paars ist, welches bei Kontakt einer wässrigen Lösung mit der mindestens einen Beschichtung in dieser wässrigen Lösung ein Redoxpotential aufweist, das niedriger (bzw. negativer) ist als das das Redoxpotential des Redox-Paars bzw. die Redox-Potentiale der Redox-Paare eines (vorzugsweise jedes) im vor Korrosion zu schützenden Material enthaltenen Metalls(, welches mit dieser wässrigen Lösung in Kontakt steht).

Eine bevorzugte Ausführungsform des erfindungsgemäßen beschichteten Substrats zeichnet sich dadurch aus, dass der mindestens eine Komplexbildner und/oder das mindestens eine Reduktionsmittel
- kovalent an das (Polysiloxan-)Xerogel gebunden ist/sind, und/oder
- an das (Polysiloxan-)Xerogel adsorbiert ist/sind.

Eine weitere bevorzugte Ausführungsform des erfindungsgemäßen beschichtetes Substrats ist dadurch gekennzeichnet, dass das mindestens eine metallhaltige Ion mindestens ein Metall enthält, das
- die oxidierte Form eines (korrespondierenden) Redox-Paars ist, welches bei Kontakt einer wässrigen Lösung (z.B. einer wässrigen Salz-Lösung oder einer wässrigen Puffer-Lösung) mit der mindestens einen Beschichtung in dieser wässrigen Lösung (bevorzugt bei einer Temperatur von 5 °C bis 50 °C, z.B. bei einer Temperatur von 25 °C) ein höheres (bzw. positiveres) Redoxpotential aufweist als das (korrespondierende) Redox-Paar O₂/H₂O und/oder das (korrespondierende) Redox-Paar O₂/OH⁻ (je nach pH-Wert), und/oder
- mit Hydroxid-Anionen und/oder Oxid-Anionen eine Metallhydroxid- und/oder Metalloxid-Schicht bilden kann (bzw. bei Kontakt einer wässrigen Lösung mit einem mit der Beschichtungsmischung hergestellten beschichteten Substrat mit Hydroxid-Anionen und/oder Oxid-Anionen eine Metallhydroxid- und/oder Metalloxid-Schicht bildet).

Die wässrige Salz-Lösung kann vorzugsweise einen Salz-Anteil von 0,1 Gew.-% bis 20 Gew.-%, bevorzugt von 0,5 Gew.-% bis 15 Gew.-% (z.B. einen Salz-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweisen. Beispielweise kann es sich bei der wässrigen Salz-Lösung um eine wässrige NaCl-Lösung handeln, welche vorzugsweise einen NaCl-Anteil von 0,1 Gew.-% bis 20 Gew.-%, bevorzugt von 0,5 Gew.-% bis 15 Gew.-% (z.B. einen NaCl-Anteil von 3,5 Gew.-%), bezogen auf die Gesamtmasse der Lösung, und/oder einen pH-Wert von 3 bis 11, bevorzugt von 5 bis 9 (z.B. einen pH-Wert von 7) aufweist.

Die wässrige Puffer-Lösung kann vorzugsweise einen Puffer-Anteil von 0,1 Gew.-% bis 20 Gew.-%, bevorzugt von 0,5 Gew.-% bis 15 Gew.-% (z.B. einen Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweisen. Beispielweise kann es sich bei der wässrigen Puffer-Lösung um eine wässrige Natriumtetraborat/Borsäure-Puffer-Lösung handeln, die vorzugsweise einen Natriumtetraborat/Borsäure-Puffer-Anteil von 0,1 Gew.-% bis 20 Gew.-%, bevorzugt von 0,5 Gew.-% bis 15 Gew.-% (z.B. einen Natriumtetraborat/Borsäure-Puffer-Anteil von 3,5 Gew.-%), bezogen auf die Gesamtmasse der Lösung, und/oder einen pH-Wert von 7 bis 10, bevorzugt von 8 bis 9 (z.B. einen pH-Wert von 8,5) aufweist.

Das Merkmal, dass das im mindestens einen metallhaltigen Ion enthaltene Metall die oxidierte Form eines Redox-Paars ist, welches bei Kontakt einer wässrigen Lösung mit der mindestens einen Beschichtung in dieser wässrigen Lösung ein höheres (bzw. positiveres) Redoxpotential aufweist als das Redox-Paar O₂/H₂O und/oder das Redox-Paar O₂/OH⁻ (je nach pH-Wert), kann mithilfe der zyklischen Voltametrie nachgewiesen werden. Hierbei kann durch die zyklische Voltametrie ermittelt werden, welche Redox-Reaktion in welchem Maße abläuft. Wird dabei ermittelt, dass lediglich das im mindestens einen metallhaltigen Ion enthaltene Metall reduziert wird, wohingegen Sauerstoff nicht reduziert wird, ist das klarer Beleg dafür, dass das genannte Merkmal erfüllt ist. Hierbei kann z.B. ein Spannungsvorschub (Scanrate) von 20 mV/s sowie ein 3-Elektrodensystem eingesetzt werden, wobei die Messung z.B. bei einer Temperatur von 25 °C und/oder z.B. in einer wässrigen NaCl-Lösung mit einem NaCl-Anteil von 3,5 Gew.-%, bezogen auf die Gesamtmasse der Lösung, und/oder einem pH-Wert von 7; oder einer wässrigen Natriumtetraborat/Borsäure-Puffer-Lösung mit einem Natriumtetraborat/Borsäure-Puffer-Anteil von 3,5 Gew.-%, bezogen auf die Gesamtmasse der Lösung, und/oder einem pH-Wert von 8,5 durchgeführt werden kann.

Eine weitere bevorzugte Ausführungsform des erfindungsgemäßen beschichtetes Substrats ist dadurch gekennzeichnet, dass
- das (Polysiloxan-)Xerogel (durch Vernetzung) aus mindestens einem Silan (und/oder mindestens einem aus dem mindestens einen Silan gebildeten Oligosiloxan) gebildet (bzw. hergestellt) ist, wobei das mindestens eine Silan funktionalisiert ist und/oder mindestens eine an das Si-Atom gebundene Alkoxygruppe mit 1 bis 4 Kohlenstoffatomen aufweist, wobei das mindestens eine Silan vorzugsweise mindestens eine an das Si-Atom gebundene Gruppe aufweist, die jeweils unabhängig voneinander ausgewählt ist aus der Gruppe bestehend aus Alkylgruppen mit 1 bis 4 Kohlenstoffatomen, die eine oder mehrere Gruppen ausgewählt aus Aminogruppen, Organosulfonylgruppen, Epoxygruppen und Kombinationen hiervon aufweisen können, und Alkoxyalkylgruppen, die eine oder mehrere Gruppen ausgewählt aus Aminogruppen, Organosulfonylgruppen, Epoxygruppen und Kombination hiervon aufweisen können, und/oder
- das vor Korrosion zu schützende Material ausgewählt ist aus der Gruppe bestehend aus
   - Aluminium;
   - Eisen;
   - Legierungen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff, und Mischungen hiervon;
   - intermetallischen Phasen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff und Mischungen hiervon;
   - sowie Mischungen hiervon, und/oder
- der mindestens eine Komplexbildner mindesten ein Komplexbildner zur Komplexierung von Kationen ausgewählt aus der Gruppe bestehend aus Aluminiumkationen, Eisenkationen, Kupferkationen, Magnesiumkationen, Zinkkationen, Chromkationen, Mangankationen, Siliciumkationen, und Mischungen hiervon ist, wobei der mindestens eine Komplexbildner vorzugsweise ausgewählt ist aus der Gruppe bestehend aus Alizarin S; 2,2',2",2"'-(Ethan-1,2-diyldinitrilo)tetraessigsäure und deren Salze; 2,2',2",2"'-[(1R,2R)-1,2-Cyclohexandiyldinitrilo]tetraessigsäure und deren Salze; Ethylenglycol-bis(β-aminoethylether)-N,N,N',N'-tetraessigsäure und deren Salze; Ascorbinsäure und deren Isomere, Konjugate und Salze; Cyanusäure und deren Isomere und Salze; Weinsäure und deren Isomere und Salze; 1,4-Dioxan; Melamin und dessen Isomere und Derivate; Thioharnstoff; Cystein; sowie Mischungen hiervon, und/oder
- der mindestens eine als Reduktionsmittel fungierende Komplexbildner ausgewählt ist aus der Gruppe bestehend aus Ascorbinsäure und deren Isomere, Konjugate und Salze; Melamin und dessen Isomere und Derivate; Thioharnstoff; Cystein; sowie Mischungen hiervon, und/oder
- das mindestens eine Reduktionsmittel ausgewählt ist aus der Gruppe bestehend aus Vanillin und dessen Isomere und Homologe, Bisulphiten, Sulphiten, Dithioniten, Glutathion, Polyphenolen, sowie Mischungen hiervon, und/oder
- das mindestens eine metallhaltige Ion ausgewählt ist aus der Gruppe bestehend aus Alkalimetall-Kationen, Erdalkalimetall-Kationen, Übergangsmetall-Kationen, Lanthanoid-Kationen, sowie Mischungen hiervon, bevorzugt ausgewählt ist aus Cer(III)-Kationen, Cer(IV)-Kationen, Lithium-Kationen, Natrium-Kationen, Molybdän-Oxoanionen, Mangan-Oxoanionen, sowie Mischungen hiervon.

Besonders bevorzugt ist das vor Korrosion zu schützende Material ausgewählt aus der Gruppe bestehend aus
- Aluminium;
- Eisen;
- Stahl;
- Legierungen bestehend aus Aluminium und mindestens einem Stoff ausgewählt aus der Gruppe bestehend aus Kupfer, Magnesium, Eisen, Zink, Silicium, Chrom, Mangan, und Mischungen hiervon;
- intermetallischen Phasen bestehend aus Aluminium und mindestens einem Stoff ausgewählt aus der Gruppe bestehend aus Kupfer, Magnesium, Eisen, Zink, Silicium, Chrom, Mangan, und Mischungen hiervon;
- Legierungen bestehend aus Eisen und mindestens einem Stoff ausgewählt aus der Gruppe bestehend aus Kupfer, Magnesium, Zink, Silicium, Chrom, Mangan, und Mischungen hiervon;
- intermetallischen Phasen bestehend aus Eisen und mindestens einem Stoff ausgewählt aus der Gruppe bestehend aus Kupfer, Magnesium, Zink, Silicium, Chrom, Mangan, und Mischungen hiervon;
- sowie Mischungen hiervon.

Eine weitere bevorzugte Ausführungsform des erfindungsgemäßen beschichtetes Substrats zeichnet sich dadurch aus, dass es sich bei der mindestens einen Beschichtung um eine einzelne Schicht, eine Mehrschicht, einen Teil eines Mehrfachschichtsystems in Kombination mit mindestens einer weiteren Beschichtung, eine Grundierung, eine Konversionsbeschichtung, eine Klarlackschicht, oder um eine Kombination hiervon handelt.

Eine weitere bevorzugte Ausführungsform des erfindungsgemäßen beschichteten Substrats ist dadurch gekennzeichnet, dass das beschichtete Substrat mit dem erfindungsgemäßen Verfahren herstellbar oder hergestellt ist.

Vorzugsweise enthält die mindestens eine Beschichtung des erfindungsgemäßen beschichteten Substrats kein Cr(III) und kein Cr(VI). Besonders bevorzugt enthält die mindestens eine Beschichtung des erfindungsgemäßen beschichteten Substrats kein Chrom (d.h. kein Chrom jeglicher Oxidationsstufe), insbesondere weder in Form von Chromkationen, noch in Form von Chrom-Oxoanionen bzw. Chromat. Dies kann dadurch erreicht werden, dass die Beschichtung mit einer Beschichtungsmischung hergestellt wird, die kein Cr(III) und kein Cr(VI) enthält, vorzugweise kein Chrom (d.h. kein Chrom jeglicher Oxidationsstufe), insbesondere weder in Form von Chromkationen, noch in Form von Chrom-Oxoanionen bzw. Chromat, enthält.

Hierbei ist anzumerken, dass die Möglichkeit besteht, dass nach längerer Zeit der Verwendung des beschichteten Substrats, im Substratmaterial eventuell enthaltenes Chrom sich aus dem Substratmaterial löst und in die Beschichtung gelangt, sodass die Beschichtung dann doch minimale Anteile an Chrom enthalten würde, selbst wenn sie mit einer Beschichtungsmischung hergestellt wurde, die kein Chrom enthält. Da sich Chrom jedoch aus thermodynamischen Gründen viel später aus dem Substratmaterial löst (und dann in die Beschichtung gelangen kann), als andere Bestandteile des Substratmaterials, würden - sofern Chrom im Substratmaterial enthalten ist - erst nach sehr langer Zeit der Verwendung des beschichteten Substrats minimale Anteile an Chrom in der Beschichtung vorhanden sein.

Vorzugsweise ist die mindestens eine Beschichtung des erfindungsgemäßen beschichteten Substrats mit einer Beschichtungsmischung herstellbar oder hergestellt, die kein Cr(III) und kein Cr(VI) enthält. Besonders bevorzugt ist die mindestens eine Beschichtung des erfindungsgemäßen beschichteten Substrats mit einer Beschichtungsmischung herstellbar oder hergestellt, die kein Chrom (d.h. kein Chrom jeglicher Oxidationsstufe), insbesondere weder in Form von Chromkationen, noch in Form von Chrom-Oxoanionen bzw. Chromat, enthält.

Gemäß einer weiteren bevorzugten Ausführungsform des erfindungsgemäßen beschichtetes Substrats, weist die mindestens eine Beschichtung eine Dicke von 500 nm bis 800 nm auf.

Die vorliegende Erfindung betrifft zudem auch die Verwendung eines erfindungsgemäßen beschichteten Substrats als Bauteil in der Luft- und Raumfahrtindustrie, in der Automobilindustrie, im Schiffsbau, in der Präzisionstechnik.

Die vorliegende Erfindung kann in verschiedenen Bereichen Anwendung finden, beispielsweise in einem oder mehreren der Bereiche:
- Korrosionsschutz von Baustahl
- Korrosionsschutz von legiertem Stahl
- Korrosionsschutz von (feuer-)verzinktem Stahl
- Korrosionsschutz von Aluminium für die Luftfahrtindustrie
- Korrosionsschutz von Aluminium für andere Industriezweige, mögliche Substitution des Eloxierens
- Adhäsionsfördernd in Verbundwerkstoffen
- Ausgleichsschnittstelle in Verbundwerkstoffen bei der Kombination von Materialien mit nicht konformen Materialparametern, z. B. Wärmeausdehnungskoeffizient, elektrische und ionische Leitfähigkeit, magnetische Suszeptibilität
- Digitaldruck von metallischen Substraten mit typischen wasserbasierten Druckfarben

Die Beschichtung des erfindungsgemäßen beschichteten Substrats kann die folgenden vorteilhaften Eigenschaften aufweisen:
- sehr kleine Porengröße
- sehr dünne Schichten (Dicke ähnlich der von typischen Konversionsbeschichtungen) möglich, z.B. 500 nm bis 800 nm
- dichte Schicht mit körniger Morphologie; sehr gute Haftung, Partikel bleiben nach dem Bruch auf der Oberfläche (Kryobruch)
- Hervorragende Korrosionsbeständigkeit
- Verbesserte mechanische Beständigkeit
- Hervorragende Haftung auf allen Metalloberflächen sowie auf allen darunter- oder darüberliegenden Beschichtungen
   → erhöhte Kompatibilität mit typischen Beschichtungen der Automobil- und Luftfahrtindustrie
   → beliebige Kombination mit gängigen Zusammensetzungen von Basislacken, Decklacken ist denkbar, um Mehrschichtsysteme oder Hybridsysteme oder Sandwichstrukturen oder Verbundstrukturen zu bilden
- Diffusionsbarrierewirkung für Wasser und andere korrosive Stoffe
- Möglichkeit zur Lackierung, Verklebung, Bedruckung
- Möglichkeit zum chemisch kontrollierten (aktiven) Korrosionsschutz (eine Art Selbstheilung)
- geringer Inspektions- und Reparaturbedarf

Die Bildung der Siloxanpolymere bzw. des Polysiloxan-Xerogels, d.h. der Sol-Gel-Prozess, kann mit Hilfe der Fourier-Transformations-Infrarotspektroskopie überwacht werden.

Die Konzentration der vorhandenen Metallionen kann durch optische Emissionsspektroskopie mit induktiv gekoppeltem Plasma bestimmt werden, wobei die Lösungen anhand ihrer Spektrallinien analysiert werden.

Gebundene Komplexbildner und/oder Reduktionsmittel können durch Messung des Rückstands in der Lösung durch Titration oder andere spezifische Analysemethoden bestimmt werden.

Morphologie, Struktur, Bedeckung und Adhäsionskraft des Substrats können mit Hilfe der Rasterelektronenmikroskopie an gebrochenen Proben (Kryobruch) bestimmt werden. Die Adhäsion kann durch Gitterschnittprüfung nach DIN EN ISO 2409:2020 weiter analysiert werden.

Zur Bestimmung der Korrosionsinhibitions-/Schutzeigenschaften kann der Salzsprühtest nach DIN EN ISO 9227:2017 angewendet werden. Bei dem Test befinden sich die Proben in einer Kammer, in der bei einer Temperatur von 35 °C kontinuierlich eine 5 m/m%-ige NaCl-Lösung vernebelt wird. Der Nebel schlägt sich auf den Oberflächen der Proben nieder und wirkt korrosiv. Die Prüfdauer wird nach der zu erwartenden Korrosionsbeständigkeit des Werkstoffes oder der Schicht gewählt. Die Proben werden in regelmäßigen Abständen auf erste Korrosionserscheinungen visuell geprüft. Tritt nach der festgelegten Zeit keine Korrosion auf, so kann ein ausreichender Korrosionsschutz angenommen werden. Der Prozess der anodischen Unterwanderung und der kathodischen Delamination kann untersucht werden, wenn vor Beginn der Prüfung auch ein Klingenschnitt an der Beschichtung durchgeführt wird.

Zur Untersuchung aktiver Schutzmechanismen, d.h. ob auch im Falle einer Schichtschädigung eine eingeschränkte Korrosion stattfindet im Vergleich zu einer Beschichtung, bei der nur passive Effekte anzunehmen sind, kann die Scanning Kelvin Probe verwendet werden. Die kathodische Delamination und die anodische Unterwanderung als die häufigsten Versagensmechanismen einer Metall-Polymer-Verbindung in korrosiven Atmosphären und bei Einwirkung von korrosiven Elektrolytlösungen werden detailliert beschrieben. Es gibt mehrere Techniken für ihre Untersuchung, die von Stratman et al. empfohlen werden. Die Scanning Kelvin Probe hat sich als das leistungsfähigste Werkzeug erwiesen, um die Komplexität aller stattfindenden Prozesse zu verstehen. Im Gegensatz zu den herkömmlichen elektrochemischen Techniken ist die Scanning-Kelvin-Sonde eine lokale elektrochemische Messmethode zur Bestimmung der Potenzialverteilung auf einer Oberfläche, z. B. einer Metall- oder Polymer-Metall-Grenzfläche.

Elektrochemische Messungen, d. h. Leerlaufpotential, potentiodynamische Messungen und elektrochemische impedanzspektroskopische Untersuchungen können durchgeführt werden, um die Korrosionsschutzfähigkeiten der vorliegenden erfindungsgemäßen Beschichtung im Vergleich zu unbeschichteten Proben oder anderen Beschichtungsarten zu bewerten.

Die Raman-Spektroskopie kann zur Bestimmung und qualitativen Analyse von Ausscheidungen, Molekülen (als Schutzmittel oder Korrosionsprodukte) direkt auf der Oberfläche eingesetzt werden.

Die vorliegende Erfindung wird anhand der nachfolgenden Figuren und Beispiele näher erläutert, ohne die Erfindung auf die speziell dargestellten Parameter zu beschränken.

### Ausführungsbeispiel 1

Um die Erfindung näher zu erläutern, konzentrieren wir uns beispielhaft auf das Trägermaterial AA2024-T3 mit einer Alizarin S-funktionalisierten (3-Gly-cidyloxypropyl)trimethoxysilan (GPTMS)-Beschichtung mit Cer(III)-Ionen und Cer(IV)-lonen, Ascorbinsäure und Natriumcarbonat (wobei letzteres zum Stoppen des Syntheseprozesses durch Verschiebung des pH-Wertes in den alkalischen Bereich verwendet wurde).

### Herstellung der Beschichtungsmischung:

Alle Chemikalien wurden von Merck (Sigma-Aldrich) bezogen, wobei die Reinheit der Chemikalien die höchste einkaufbare ist, sofern nicht anders angegeben. In diesem Beispiel werden 400 ml deionisiertes Wasser entnommen und 79,2 ml GPTMS (3-Glycidyloxypropyl)trimethoxysilan) sowie 39,6 ml Tetraethylorthosilicat zugesetzt. Dazu werden auch 25 ml 1 mol·l⁻¹ Essigsäurelösung gegeben. Die Lösung sieht zunächst leicht trüb aus, wird dann aber schnell farblos und klar. Sie wird 30 Minuten lang auf einer Rührplatte stehen gelassen. In einem separaten kleineren Gefäß werden 80 ml entionisiertes Wasser mit 4,104 g Alizarin S angesetzt. Auch hier wird 15 Minuten lang magnetisch gerührt. Die Lösung ist homogen und hat eine bernsteinfarbene Färbung. In einem separaten Behälter werden 7,2 ml Bortrifluorid-Etherat-Katalysator in 120 ml Wasser dispergiert. Nachdem die erste und die zweite Lösung die erforderliche Zeit gerührt wurden, gibt man zunächst die Alizarin S-Dispersion zur GPTMS-Lösung und dann tropfenweise die Bortrifluoridetherat-Dispersion als Katalysator hinzu. Nun geben wir 10 mg Ce(III)-Nitrat, 10 mg Ce(IV)-Nitrat und 1 g L-Ascorbinsäure zu. Wir lassen die Reaktion eine Stunde lang unter ständigem Rühren laufen. Nach einer Stunde fügen wir der Lösung in kleinen Schritten Natriumcarbonat hinzu, während wir den pH-Wert überwachen, bis der pH-Wert 7 erreicht. Zu diesem Zeitpunkt sollte die Lösung klar sein und eine tiefe Bernsteinfarbe haben. Wir seihen die Lösung ab und fügen dann 117,6 ml Ethanol hinzu. Die etwa 800 ml Lösung kann nun im Verhältnis 1:5 mit destilliertem Wasser verdünnt und zum Beschichten von Oberflächen verwendet werden.

### Herstellung des beschichteten Substrats:

Als Ausgangssubstrat wird ein Substrat aus einer Aluminiumlegierung mit kupferhaltigen intermetallischen Phasen verwendet (Substratmaterial: AA2024-T3). Die Vorbehandlung des Substrats bestand aus dem Entfetten, dem alkalischen Ätzen und dem sauren Ätzen (Beizen) des zu beschichtenden Substrats, während zwischen den einzelnen Schritten ein Spülvorgang mit destilliertem Wasser durchgeführt wurde. Nach der Vorbehandlung erfolgte der Beschichtungsvorgang mit der wie oben beschrieben hergestellten Beschichtungsmischung.

Die genauen Schritte im Einzelnen in der angewandten Reihenfolge:
- Entfetten des Substrats (Substratmaterial: AA2024) durch Eintauchen des Substrats in destilliertes Wasser + ENPREP 144 (60 g/l, McDermid, Inc.) bei 60 °C für 15 min
- Spülen durch Eintauchen des Substrats in destilliertes Wasser für 5 min
- Alkalisches Ätzen durch Eintauchen des Substrats in destilliertes Wasser + 10% NaOH bei 60 °C für 1 min
- Spülen durch Eintauchen des Substrats in destilliertes Wasser für 5 min
- Saures Ätzen (Beizen) durch Eintauchen des Substrats in destilliertes Wasser + 22% HNO₃ + 15% Alfideox 79 (Alufinish GmbH & Co. KG) bei Raumtemperatur für 10 min
- Spülen durch Eintauchen des Substrats in destilliertes Wasser für 5 min
- Aufbringen der Beschichtungsmischung durch Eintauchen des Substrats in die Beschichtungsmischung bei Raumtemperatur für 10 min
- Aushärten bei 80 °C für 1h

Im Folgenden werden die Rollen der Hauptkomponenten in diesem Ausführungsbeispiel zusammengefasst:
- Einbindung von Ce(IV) als metallhaltiges Ion bzw. Metallkation, das zu Ce(III) reduziert werden kann und dabei einen Oxid/Hydroxid-Niederschlag bildet
- Integration von Ascorbinsäure als Reduktionsmittel, das Elektronen für die Reduktion von Ce(IV) spendet

- Einbau von Alizarin S und Funktionalisierung von Silan mit Alizarin S, das eine alkalische Hydrolyse unter Bildung von OH⁻ durchläuft und kinetisch und thermodynamisch stabile Aluminiumkomplexe bilden kann. Alizarin S wurde als hervorragender und spezifischer Komplexbildner für Aluminium ausgewählt. Außerdem kann eine kovalente Bindung an Silane mit Epoxidringen durchgeführt werden.
- Einbindung von Ascorbinsäure als zu oxidierendes Opfermittel
- Verwendung von Natriumcarbonat zur Neutralisation nach säurekatalysierter Polysiloxanbildung: CO₃²⁻ erzeugt OH⁻
- Das Polysiloxan-Netzwerk als physikalische Diffusionsbarriere für korrosive Agenzien und Substanzen verschlechtert die Korrosionsreaktionskinetik und ist ein Reservoir für die eingesetzten Additive, um eine homogene Korrosionsschutzwirkung zu erzielen

Im unbehandelten Substrat würde die kupferreiche intermetallische Phase die Lochfraßkorrosion einleiten: Sie ist die kathodische Stelle, an der die Sauerstoffreduktionsreaktion einsetzt und Elektronen erzeugt. Dies führt durch Aufnahme dieser Elektronen zu einer anodischen Oxidation von Aluminium an einer anderen Stelle der Substratoberfläche. Diese Prozesse werden durch die aufgetragene Beschichtung gestoppt.

Die Metallkationen (Cer(III)) bilden Ceroxide/-hydroxide (Niederschläge), welchte als Schutzmittel auf der Oberfläche gelten. Hierfür wird ein alkalisches Medium durch eine Sauerstoffreduktionsreaktion erzeugt. Die entsprechende Gegenreaktion ist jedoch die Aluminiumoxidation. Um die Aluminiumoxidation zu verhindern, findet eine Redoxreaktion zwischen einer "Opfer"-Spezies und Sauerstoff stattfinden.

Die Opferspezies ist das starke Reduktionsmittel. Wenn Elektronen von anderen Spezies (nicht von Aluminium) abgegeben werden, kann eine Sauerstoff-reduktionsreaktion stattfinden und die Bildung einer schützenden Ceroxid-/Hydroxidschicht erfolgen. Daher erhält der stark reduzierende Zusatzstoff (Ascorbinsäure) aufgrund der Redoxpotential-Relation E(Al³⁺/Al) > E (Ox/Red) ("Opfer"/anfällige Spezies) die Elektronen.

Der Komplexbildner Alizarin S, der sehr spezifisch für Aluminiumionen ist, manipuliert E(Al³⁺/Al) in eine positivere Richtung, um nicht oxidiert zu werden.

Das Unterdrücken der Sauerstoff-Reduktionsreaktion wird durch das stark oxidierende Cer(IV) erreicht, dessen Reduktion die Elektronenspende übernimmt.

Durch eine lokale Wasserstoffperoxid- oder Hydroxidionenbildung wird die Bildung von Oxid-/Hydroxidausfällungen erreicht. Dies kann durch Zusätze oder funktionelle Gruppen realisiert werden, die den pH-Wert verschieben können. Wie oben beschrieben, binden phenolische OH-Gruppen kovalent Alizarin S und CO₃²⁻ Ionen.

Auch die Matrix des Polysiloxan-Netzwerks spielt eine wichtige Rolle. Die Kinetik der Korrosionsreaktionen wird durch die begrenzte Zufuhr von Spezies aus der Atmosphäre stark beeinflusst. Eine Beschichtung auf Wasserbasis würde zu einem sporadischen Auftreten von Additiven auf der Substratoberfläche führen. Das verwendete Polysiloxan-Netzwerk bzw. Polysiloxan-Xerogel als Reservoir ermöglicht eine homogene Verteilung auch im Falle einer beschädigten Beschichtung. Das Polysiloxan-Netzwerk ist in der Lage, kleine "Kapseln", Hohlräume, zu bilden, in denen die Prozesse lokal stattfinden können, ohne dass die gesamte Oberfläche betroffen ist. Polysiloxan selbst wäre nur eine Versiegelungsschicht mit passivem Korrosionsschutz. Zusammen mit den weiteren verwendeten Komponenten werden jedoch verschiedene Möglichkeiten aktiver korrosionshemmender chemischer und elektrochemischer Prozesse initiiert.

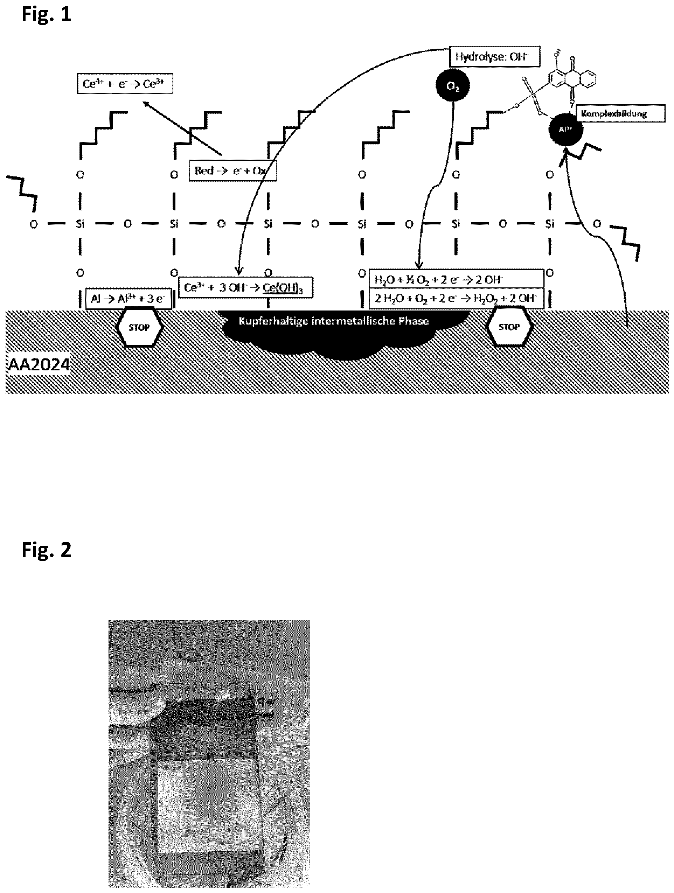

Die eben beschriebenen Prozesse sind in Fig. 1 schematisch zusammengefasst.

### Eigenschaften der hergestellten Beschichtungszusammensetzung:

- Ausgezeichnete Lagerstabilität, keine Sedimentations- oder Ausfällungserscheinungen zu beobachten
- Einfache Applikation mittels gängiger Techniken (Tauchen, Rakeln, Walzen, Schleudern etc.) in robuster und schneller Weise
- Möglichkeit der lokalen Anwendung/Reparatur (Sprühen, Pinseln)
- Umweltfreundlich, nachhaltig sowie energie-/umweltschonend (Niedrigtemperaturverfahren, geringer Spülwasserbedarf und damit weniger Abwasser)
- Einfache Anpassung an spezifische Kundenanforderungen, Suche nach neuen Hochleistungsadditiven

### Eigenschaften der hergestellten Beschichtung auf dem Substrat:

- sehr kleine Porengröße
- sehr dünne Schichten (Dicke ähnlich der von typischen Konversionsbeschichtungen) möglich, 500-800 nm
- laut Rasterelektronenmikroskopie: dichte Schicht mit körniger Morphologie; sehr gute Haftung, Partikel bleiben nach dem Bruch auf der Oberfläche (Kryobruch)
- Hervorragende Korrosionsbeständigkeit (wissenschaftlich-technisch nachgewiesene Wirkung, 1,5 - 2 mal bessere Leistung im Salzsprühtest nach DIN ISO 9227:2017 im Vergleich zu üblichen Konversionsbeschichtungen auf AA2024) - keine Korrosion bis zu 960 Stunden
- Verbesserte mechanische Beständigkeit (konischer Biegetest mit folgendem SEM: Verformbarkeit des Substrats ohne Rissbildung in der Beschichtungsschicht aus der erfindungsgemäßen Beschichtungszusammensetzung, Kratzfestigkeit)
- Hervorragende Haftung auf allen Metalloberflächen sowie auf allen darunter- oder darüberliegenden Beschichtungen
   → erhöhte Kompatibilität mit typischen Beschichtungen der Automobil- und Luftfahrtindustrie
   → beliebige Kombination mit gängigen Zusammensetzungen von Basislacken, Decklacken ist denkbar, um Mehrschichtsysteme oder Hybridsysteme oder Sandwichstrukturen oder Verbundstrukturen zu bilden
- Diffusionsbarrierewirkung für Wasser und andere korrosive Stoffe
- Möglichkeit zur Lackierung, Verklebung, Bedruckung
- Möglichkeit zum chemisch kontrollierten (aktiven) Korrosionsschutz (eine Art Selbstheilung)
- geringer Inspektions- und Reparaturbedarf

Fig. 2 zeigt eine fotographische Aufnahme des hier im Ausführungsbeispiel hergestellten beschichteten Substrats nach einem durchgeführten Salzsprühtest gemäß DIN ISO 9227:2017 nach 960 Stunden. Wie gut zu erkennen ist, zeigen sich keinerlei Anzeichen von Korrosion. Das beschichtete Substrat weist demnach eine hervorragende Korrosionsbeständigkeit auf.

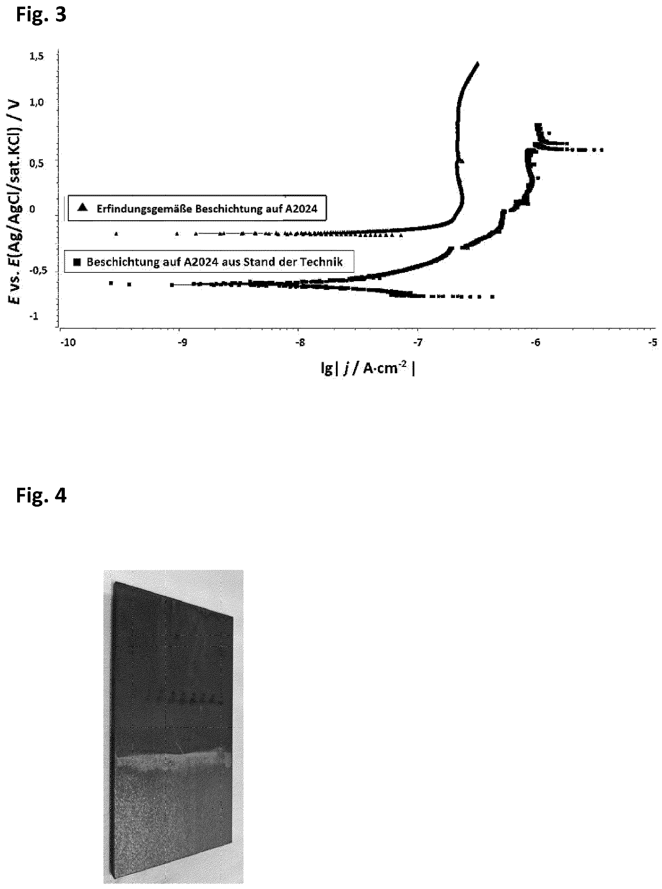

In Fig. 3 ist ein Diagramm einer potentiodynamischen Messung der hier im Ausführungsbeispiel hergestellten erfindungsgemäßen Beschichtung im Vergleich zu einer gemäß dem Stand der Technik hergestellten Beschichtung auf Cr(III)-Basis auf einem AA2024-Substrat dargestellt (pH 9-Boratpuffer, Raumtemperatur, Vorschubgeschwindigkeit: 0,05 mV · s-1, Start: -50 mV vs. OCP, Ende: 1500 mV vs. OCP, 3-Elektrodensystem, AE: beschichtete Platte, RE: Ag/AgCI/sat.KCI, GE: Platinblech). Wie aus dem Diagramm hervorgeht, deutet die elektrochemische Messung auf eine deutlich bessere korrosionsschützende Wirkung hin im Vergleich zur Cr(III)-haltigen Beschichtung. Flacher Teil der Kurve: Entstehung von schützender Passivschicht, die Verschiebung des Ruhepotenzials: anderes Redoxsystem nimmt über (durch Komplexbildung u. Reduktionsmittel), die viel niedrigeren Ströme: langsame Reaktionen (Diffusionsbarriere-Wirkung).

### Ausführungsbeispiel 2

Es wurde zunächst eine Beschichtungsmischung hergestellt, wobei die Herstellung wie in Ausführungsbeispiel 1 erfolgte, außer dass kein Alizarin S verwendet wurde. Bei Alizarin S handelt es sich um einen Komplexbildner für Al³⁺.

Unter Verwendung der hergestellten Beschichtungsmischung wurde ein halbbeschichtetes Substrat hergestellt, wobei als Ausgangssubstrat ein Substrat aus Baustahl verwendet wurde. Es wurde lediglich ca. die Hälfte der Oberfläche des Baustahl-Substrats mit einer Beschichtung versehen, wobei das Beschichtungsverfahren ansonsten wie in Ausführungsbeispiel 1 durchgeführt wurde.

Fig. 4 zeigt das halbbeschichtete Baustahl-Substrat nach 168 h neutralem Salzsprühtest nach DIN ISO 9227:2017. Der untere Teil des in Fig. 4 gezeigten Substrats ist beschichtet, wohingegen der obere Teil unbeschichtet ist. Das Baustahlmaterial wurde als Rohmaterial für Rotoren in Elektrofahrzeugen getestet. Auf dem beschichteten Teil des Substrats zeigen sich keinerlei Anzeichen von Korrosion, was eine hervorragende Anti-Korrosionswirkung der Beschichtung belegt.

### Ausführungsbeispiel 3

Mit der erfindungsgemäßen Beschichtung ist es auch gelungen, Stahl- und Aluminiumsubstrate mit wasserbasierten Tinten, die Styrolacrylatbinder mit relativ vielen Carboxylgruppen und hochmolekularem Harz enthalten, digital zu bedrucken. Dies hat eine große Bedeutung für Frontplatten und Schaltschränke, aber auch für andere Hinweisschilder.

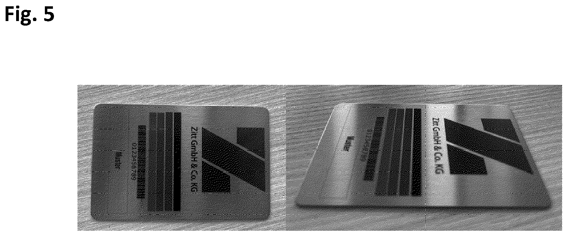

In Fig. 5 ist ein beispielhaftes erfindungsgemäßes beschichtetes Substrat, das entsprechend bedruckt wurde, dargestellt. Es handelt sich um ein beschichtetes Baustahlsubstrat, welches digital bedruckt wurde.

Die Herstellung der Beschichtungsmischung sowie die anschließende Herstellung des beschichteten Substrats erfolgten wie in Ausführungsbeispiel 2 beschrieben.

## Patentansprüche

1. Beschichtungsmischung zur Beschichtung von Substraten aus vor Korrosion zu schützendem Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, wobei die Beschichtungsmischung mindestens ein Silan und/oder mindestens ein aus dem mindestens einen Silan gebildetes Oligosiloxan, mindestens einen Komplexbildner zur Komplexierung von Kationen mindestens eines im vor Korrosion zu schützenden Material enthaltenen Metalls, mindestens ein metallhaltiges Ion und mindestens ein Lösungsmittel enthält,
wobei das mindestens eine Silan mindestens eine an das Si-Atom gebundene Alkoxygruppe mit 1 bis 4 Kohlenstoffatomen aufweist, und wobei
- der mindestens eine Komplexbildner mindestens einen als Reduktionsmittel fungierenden Komplexbildner umfasst, der die reduzierte Form eines Redox-Paars ist, welches bei Kontakt einer wässrigen Lösung mit einer mit der Beschichtungsmischung hergestellten Beschichtung in dieser wässrigen Lösung ein niedrigeres Redoxpotential aufweist als das/die Redox-Paar(e) eines im vor Korrosion zu schützenden Material enthaltenen Metalls, und/oder
- die Beschichtungsmischung zusätzlich mindestens ein Reduktionsmittel enthält, das die reduzierte Form eines Redox-Paars ist, welches bei Kontakt einer wässrigen Lösung mit einer mit der Beschichtungsmischung hergestellten Beschichtung in dieser wässrigen Lösung ein niedrigeres Redoxpotential aufweist als das/die Redox-Paar(e) eines im vor Korrosion zu schützenden Material enthaltenen Metalls.

2. Beschichtungsmischung gemäß dem vorhergehenden Anspruch, **dadurch gekennzeichnet, dass**
- das mindestens eine Silan mindestens ein erstes Silan und mindestens ein zweites Silan umfasst, wobei das mindestens eine erste Silan und das mindestens eine zweite Silan jeweils mindestens eine an das Si-Atom gebundene Alkoxygruppe mit 1 bis 4 Kohlenstoffatomen aufweisen und wobei das mindestens eine erste Silan und/oder das mindestens eine zweite Silan jeweils zusätzlich eine an das Si-Atom gebundene Gruppe aufweist, die jeweils unabhängig voneinander ausgewählt ist aus der Gruppe bestehend aus Alkylgruppen mit 1 bis 4 Kohlenstoffatomen, die eine oder mehrere Gruppen ausgewählt aus Aminogruppen, Organosulfonylgruppen, Epoxygruppen und Kombinationen hiervon aufweisen können, und Alkoxyalkylgruppen, die eine oder mehrere Gruppen ausgewählt aus Aminogruppen, Organosulfonylgruppen, Epoxygruppen und Kombination hiervon aufweisen können, und/oder
- es sich bei dem mindestens einen Silan um mindestens ein funktionalisiertes Silan handelt, wobei das mindestens eine Silan vorzugsweise mit dem mindestens einen Komplexbildner, mit dem mindestens einen Reduktionsmittel, und/oder mit einem Stoff ausgewählt aus der Gruppe bestehend aus Phenolhydroxiden, Lactaten, Carboxylaten, sowie Kombinationen hiervon, funktionalisiert ist.

3. Beschichtungsmischung gemäß einem der vorhergehenden Ansprüche, **dadurch gekennzeichnet, dass**
- der mindestens eine Komplexbildner mindestens ein Komplexbildner zur Komplexierung von Kationen ausgewählt aus der Gruppe bestehend aus Aluminiumkationen, Eisenkationen, Kupferkationen, Magnesiumkationen, Zinkkationen, Chromkationen, Mangankationen, und Mischungen hiervon ist, wobei der mindestens eine Komplexbildner vorzugsweise ausgewählt ist aus der Gruppe bestehend aus Alizarin S; 2,2',2",2"'-(Ethan-1,2-diyldinitrilo)tetraessigsäure und deren Salze; 2,2',2",2‴-[(1R,2R)-1,2-Cyclohexandiyldi-nitrilo]tetraessigsäure und deren Salze; Ethylenglycol-bis(β-amino-ethylether)-N,N,N',N'-tetraessigsäure und deren Salze; Ascorbinsäure und deren Isomere, Konjugate und Salze; Cyanusäure und deren Isomere und Salze; Weinsäure und deren Isomere und Salze; 1,4-Dioxan; Melamin und dessen Isomere und Derivate; Thioharnstoff; Cystein; sowie Mischungen hiervon, und/oder
- der mindestens eine als Reduktionsmittel fungierende Komplexbildner ausgewählt ist aus der Gruppe bestehend aus Ascorbinsäure und deren Isomere, Konjugate und Salze; Melamin und dessen Isomere und Derivate; Thioharnstoff; Cystein; sowie Mischungen hiervon, und/oder
- das mindestens eine Reduktionsmittel ausgewählt ist aus der Gruppe bestehend aus Vanillin und dessen Isomere und Homologe, Bisulphiten, Sulphiten, Dithioniten, Glutathion, Polyphenolen, sowie Mischungen hiervon, und/oder
- das mindestens eine metallhaltige Ion ausgewählt ist aus der Gruppe bestehend aus Alkalimetall-Kationen, Erdalkalimetall-Kationen, Übergangsmetall-Kationen, Lanthanoid-Kationen, Oxoanionen, sowie Mischungen hiervon, wobei das mindestens eine metallhaltige Ion bevorzugt ausgewählt ist aus der Gruppe bestehend aus Cer(III)-Kationen, Cer(IV)-Kationen, Lithium-Kationen, Natrium-Kationen, Molybdän-Oxoanionen, Mangan-Oxoanionen, sowie Mischungen hiervon, und/oder
- das mindestens eine Lösungsmittel ausgewählt ist aus der Gruppe bestehend aus Wasser; Alkoholen, bevorzugt Ethanol, Isopropanol; Butylacetat; Fruchtsäureestern, und Mischungen hiervon, und/oder
- das vor Korrosion zu schützende Material ausgewählt ist aus der Gruppe bestehend aus Aluminium; Eisen; Legierungen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff, und Mischungen hiervon; intermetallischen Phasen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff und Mischungen hiervon; sowie Mischungen hiervon.

4. Beschichtungsmischung gemäß einem der vorhergehenden Ansprüche, **dadurch gekennzeichnet, dass** die Beschichtungsmischung
- Nanopartikel, die vorzugsweise ausgewählt sind aus der Gruppe bestehend aus Titanoxid-Nanopartikeln, Wolframoxid-Nanopartikeln, Aluminiumoxid-Nanopartikeln, Siliciumdioxid-Nanopartikeln, und Mischungen hiervon, und/oder
- mindestens eine Base, die vorzugsweise ausgewählt ist aus der Gruppe bestehend aus Natriumcarbonat, Lithiumcarbonat, Kaliumcarbonat, und Mischungen hiervon, und/oder
- mindestens ein Additiv ausgewählt aus der Gruppe bestehend aus Haftvermittlern, Pigmenten, Füllstoffen, und Mischungen hiervon, enthält.

5. Beschichtungsmischung gemäß einem der vorhergehenden Ansprüche, **dadurch gekennzeichnet, dass** die Beschichtungsmischung
- 5 Gew.-% bis 60 Gew.-%, bevorzugt 5 Gew.-% bis 25 Gew.-%, des mindestens einen Silans und/oder des mindestens einen Oligosiloxans, bezogen auf die Gesamtmasse der Mischung, und/oder
- 100 ppm bis 5000 ppm, bevorzugt 100 ppm bis 250 ppm, des mindestens einen Komplexbildners, bezogen auf die Gesamtmasse der Mischung, und/oder
- 100 ppm bis 5000 ppm, bevorzugt 100 ppm bis 250 ppm, des mindestens einen Reduktionsmittels, bezogen auf die Gesamtmasse der Mischung, und/oder
- 1 bis 100 ppm, bevorzugt 5 bis 10 ppm, des mindestens einen metallhaltigen Ions, bezogen auf die Gesamtmasse der Mischung, und/oder
- 100 ppm bis 1000 ppm, bevorzugt 100 ppm bis 250 ppm, Nanopartikel, bezogen auf die Gesamtmasse der Mischung, und/oder,
- 100 ppm bis 5000 ppm Gew.-%, bevorzugt 100 ppm bis 500 ppm Gew.-%, mindestens eines Additivs, bezogen auf die Gesamtmasse der Mischung,
enthält.

6. Verfahren zur Herstellung beschichteter Substrate, bei welchem
a) mindestens eine Schicht einer Beschichtungsmischung gemäß einem der vorhergehenden Ansprüche auf mindestens einen Bereich einer Oberfläche mindestens eines Substrats aus vor Korrosion zu schützendem Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, aufgebracht wird, und
b) die mindestens eine aufgebrachte Schicht mindestens einem Aushärtungsprozess unterzogen wird, bei welchem das mindestens eine Silan und/oder das mindestens eine Oligosiloxan zu einem Xerogel vernetzt wird/werden.

7. Verfahren gemäß Anspruch 6, **dadurch gekennzeichnet, dass**
- das Aufbringen der mindestens einen Schicht in Schritt a) mittels mindestens eines Auftragsprozesses erfolgt der ausgewählt ist aus der Gruppe bestehend aus Tauchen, Rakeln, Walzen, Schleudern, Sprühen, Pinseln, Streichen, und Kombinationen hiervon, und/oder
- das Substrat vor Schritt a) mindestens einer Vorbehandlung unterzogen wird, die vorzugsweise ausgewählt ist aus der Gruppe bestehend aus Reinigen, Sandstrahlen, Polieren, Entfetten, alkalischem Ätzen, saurem Ätzen, Plasmabehandlung, Laserbehandlung, sowie Kombinationen hiervon.

8. Verfahren gemäß Anspruch 6 oder 7, **dadurch gekennzeichnet, dass** der mindestens eine Aushärtungsprozess in Schritt b)
- bei einer Temperatur von 60 °C bis 120 °C, bevorzugt von 70 °C bis 100 °C, besonders bevorzugt von 80 °C bis 90 °C, und/oder
- für eine Dauer von 5 min bis 8 h, bevorzugt von 30 min bis 4 h, besonders bevorzugt von 45 min bis 2 h,
erfolgt.

9. Verfahren gemäß einem der Ansprüche 6 bis 8, **dadurch gekennzeichnet, dass** das vor Korrosion zu schützende Material ausgewählt ist aus der Gruppe bestehend aus
- Aluminium;
- Eisen;
- Legierungen umfassend oder bestehend aus
• Aluminium und/oder Eisen, sowie
• mindestens einem Stoff ausgewählt aus der Gruppe bestehend aus Kupfer, Magnesium, Zink, Silicium, Chrom, Mangan, Kohlenstoff, und Mischungen hiervon;
- intermetallischen Phasen umfassend oder bestehend aus
• Aluminium und/oder Eisen, sowie
• mindestens einem Stoff ausgewählt aus der Gruppe bestehend aus Kupfer, Magnesium, Zink, Silicium, Chrom, Mangan, Kohlenstoff und Mischungen hiervon;
- sowie Mischungen hiervon.

10. Beschichtetes Substrat, umfassend
ein metallhaltiges Substrat aus einem vor Korrosion zu schützenden Material ausgewählt aus der Gruppe bestehend aus Aluminium, Eisen, Legierungen enthaltend Eisen und/oder Aluminium, intermetallischen Phasen enthaltend Eisen und/oder Aluminium, sowie Mischungen hiervon, und
mindestens eine auf mindestens einem Bereich einer Oberfläche des Substrats angeordnete Beschichtung enthaltend ein Xerogel sowie mindestens einen Komplexbildner zur Komplexierung von Kationen mindestens eines im vor Korrosion zu schützenden Material enthaltenen Metalls, und mindestens ein metallhaltiges Ion,
wobei das Xerogel aus mindestens einem Silan gebildet ist, das mindestens eine an das Si-Atom gebundene Alkoxygruppe mit 1 bis 4 Kohlenstoffatomen aufweist,
und wobei
- der mindestens eine Komplexbildner mindestens einen als Reduktionsmittel fungierenden Komplexbildner umfasst, der die reduzierte Form eines Redox-Paars ist, welches bei Kontakt einer wässrigen Lösung mit der mindestens einen Beschichtung in dieser wässrigen Lösung ein niedrigeres Redoxpotential aufweist als das/die Redox-Paar(e) eines im vor Korrosion zu schützenden Material enthaltenen Metalls, und/oder
- die Beschichtung zusätzlich mindestens ein Reduktionsmittel enthält, das die reduzierte Form eines Redox-Paars ist, welches bei Kontakt einer wässrigen Lösung mit der mindestens einen Beschichtung in dieser wässrigen Lösung ein niedrigeres Redoxpotential aufweist als das/die Redox-Paar(e) eines im vor Korrosion zu schützenden Material enthaltenen Metalls.

11. Beschichtetes Substrat gemäß Anspruch 10, **dadurch gekennzeichnet, dass** der mindestens eine Komplexbildner und/oder das mindestens eine Reduktionsmittel
- kovalent an das Xerogel gebunden ist/sind, und/oder
- an das Xerogel adsorbiert ist/sind.

12. Beschichtetes Substrat gemäß Anspruch 10 oder 11, **dadurch gekennzeichnet, dass**
- das Xerogel aus mindestens einem Silan gebildet ist, das funktionalisiert ist und/oder mindestens eine an das Si-Atom gebundene Alkoxygruppe mit 1 bis 4 Kohlenstoffatomen aufweist, wobei das mindestens eine Silan vorzugsweise mindestens eine an das Si-Atom gebundene Gruppe aufweist, die jeweils unabhängig voneinander ausgewählt ist aus der Gruppe bestehend aus Alkylgruppen mit 1 bis 4 Kohlenstoffatomen, die eine oder mehrere Gruppen ausgewählt aus Aminogruppen, Organosulfonylgruppen, Epoxygruppen und Kombinationen hiervon aufweisen können, und Alkoxyalkylgruppen, die eine oder mehrere Gruppen ausgewählt aus Aminogruppen, Organosulfonylgruppen, Epoxygruppen und Kombination hiervon aufweisen können, und/oder
- das vor Korrosion zu schützende Material ausgewählt ist aus der Gruppe bestehend aus Aluminium; Eisen; Legierungen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff, und Mischungen hiervon; intermetallischen Phasen umfassend oder bestehend aus Aluminium und/oder Eisen sowie mindestens einem Stoff ausgewählt aus der Gruppe bestehend aus Kupfer, Magnesium, Zink, Silicium, Chrom, Mangan, Kohlenstoff und Mischungen hiervon; sowie Mischungen hiervon, und/oder
- der mindestens eine Komplexbildner mindesten ein Komplexbildner zur Komplexierung von Kationen ausgewählt aus der Gruppe bestehend aus Aluminiumkationen, Eisenkationen, Kupferkationen, Magnesiumkationen, Zinkkationen, Chromkationen, Mangankationen, Siliciumkationen, und Mischungen hiervon ist, wobei der mindestens eine Komplexbildner vorzugsweise ausgewählt ist aus der Gruppe bestehend aus Alizarin S; 2,2',2",2"'-(Ethan-1,2-diyldi-nitrilo)tetraessigsäure und deren Salze; 2,2',2",2"'-[(1R,2R)-1,2-Cyclohexandiyldinitrilo]tetraessigsäure und deren Salze; Ethylenglycol-bis(β-aminoethylether)-N,N,N',N'-tetraessigsäure und deren Salze; Ascorbinsäure und deren Isomere, Konjugate und Salze; Cyanusäure und deren Isomere und Salze; Weinsäure und deren Isomere und Salze; 1,4-Dioxan; Melamin und dessen Isomere und Derivate; Thioharnstoff; Cystein; sowie Mischungen hiervon, und/oder
- der mindestens eine als Reduktionsmittel fungierende Komplexbildner ausgewählt ist aus der Gruppe bestehend aus Ascorbinsäure und deren Isomere, Konjugate und Salze; Melamin und dessen Isomere und Derivate; Thioharnstoff; Cystein; sowie Mischungen hiervon, und/oder
- das mindestens eine Reduktionsmittel ausgewählt ist aus der Gruppe bestehend aus Vanillin und dessen Isomere und Homologe, Bisulphiten, Sulphiten, Dithioniten, Glutathion, Polyphenolen, sowie Mischungen hiervon, und/oder
- das mindestens eine metallhaltige Ion ausgewählt ist aus der Gruppe bestehend aus Alkalimetall-Kationen, Erdalkalimetall-Kationen, Übergangsmetall-Kationen, Lanthanoid-Kationen, sowie Mischungen hiervon, bevorzugt ausgewählt ist aus Cer(III)-Kationen, Cer(IV)-Kationen, Lithium-Kationen, Natrium-Kationen, Molybdän-Oxoanionen, Mangan-Oxoanionen, sowie Mischungen hiervon.

13. Beschichtetes Substrat gemäß einem der Ansprüche 10 bis 12, **dadurch gekennzeichnet, dass** es sich bei der mindestens einen Beschichtung um eine einzelne Schicht, eine Mehrschicht, einen Teil eines Mehrfachschichtsystems in Kombination mit mindestens einer weiteren Beschichtung, eine Grundierung, eine Konversionsbeschichtung, eine Klarlackschicht, oder um eine Kombination hiervon handelt.

14. Beschichtetes Substrat gemäß einem der Ansprüche 10 bis 13, **dadurch gekennzeichnet, dass** das beschichtete Substrat mit einem Verfahren gemäß einem der Ansprüche 6 bis 9 herstellbar oder hergestellt ist

15. Verwendung eines beschichteten Substrats gemäß einem der Ansprüche 10 bis 14 als Bauteil in der Luft- und Raumfahrtindustrie, in der Automobilindustrie, im Schiffsbau, in der Präzisionstechnik.
